# EUROPEAN PATENT SPECIFICATION

(11) **EP 3 906 531 B1**
(45) Date of publication and mention of the grant of the patent: **18.11.2026**
(21) Application number: 20718763.4
(22) Date of filing: 28.02.2020
(51) Int. Cl.: G06T 15/10, G06T 7/62

(54) **VIEWABILITY METRICS OF A MULTIDIMENSIONAL OBJECT IN A MULTIDIMENSIONAL DIGITAL ENVIRONMENT**
SICHTBARKEITSMETRIKEN EINES MEHRDIMENSIONALEN OBJEKTS IN EINER MULTIDIMENSIONALEN DIGITALEN UMGEBUNG
PARAMÈTRES DE VISIBILITÉ D'UN OBJET MULTIDIMENSIONNEL DANS UN ENVIRONNEMENT NUMÉRIQUE MULTIDIMENSIONNEL

(30) Priority: 30.01.2019 US 201916262879; 30.01.2019 US 201916262880; 30.01.2019 US 201916262881
(43) Date of publication of application: 10.11.2021
(73) Proprietor: Trivver, Inc., Merritt Island, FL 32952 (US)
(72) Inventor: LAMONTAGNE, Joel, Huntington Beach, California 92648 (US); KONDRATOV, Sergey, Krasnoyarsk 660017 (RU); BITNY, Igor, Newport Beach, California 92660 (US); ABRUZNIKOV, Alexander, Krasnoyarsk 660017 (RU)
(74) Representative: Valet Patent Services Limited
(86) International application number: PCT/IB2020/051733
(87) International publication number: WO 2020/157738

(56) References cited:
- ANONYMOUS: "How to calculate screen area coverage of a 3D object", UNITY COMMUNITY, 21 April 2014 (2014-04-21), pages 1 - 2, XP055705084, Retrieved from the Internet <URL:https://answers.unity.com/questions/691066/how-to-calculate-screen-area-coverage-of-a-3d-obje.html> [retrieved on 20200615]
- ANONYMOUS: "ANSYS FLUENT 12.0 User's Guide - 30.5 Projected Surface Area Calculations", 29 January 2009 (2009-01-29), XP055705653, Retrieved from the Internet <URL:https://www.afs.enea.it/project/neptunius/docs/fluent/html/ug/node963.htm#sec-project-surf> [retrieved on 20200616]
- "Computer Graphics Principles and Practice", 1 January 1987, ADDISON-WESLEY, Reading, MA, USA, article JAMES D. FOLEY ET AL: "Computer Graphics Principles and Practice", pages: 668 - 673, XP055731305
- NAGA K GOVINDARAJU ET AL: "Fast computation of database operations using graphics processors", 20050731; 1077952576 - 1077952576, 31 July 2005 (2005-07-31), pages 206 - es, XP058318221, DOI: 10.1145/1198555.1198787
- ANONYMOUS: "Style buildings-ArcGIS Online Help | ArcGIS", 7 October 2017 (2017-10-07), XP055729753, Retrieved from the Internet <URL:https://web.archive.org/web/20171007003301/https://doc.arcgis.com/en/arcgis-online/create-maps/scene-style-buildings.htm> [retrieved on 20200910]
- INIGO QUILEZ: "Sphere projection", INIGO QUILEZ :: FRACTALS, COMPUTER GRAPHICS, MATHEMATICS, SHADERS, DEMOSCENE AND MORE, 1 January 2014 (2014-01-01), XP055729674, Retrieved from the Internet <URL:https://iquilezles.org/www/articles/sphereproj/sphereproj.htm> [retrieved on 20200910]
- MIKE HERGAARDEN: "Graphics shaders", 1 January 2011 (2011-01-01), XP055731357, Retrieved from the Internet <URL:https://www.cs.vu.nl/~eliens/download/literatuur-shaders.pdf> [retrieved on 20200916]
- MARROQUIM R ET AL: "Introduction to GPU Programming with GLSL", COMPUTER GRAPHICS AND IMAGE PROCESSING (SIBGRAPI TUTORIALS), 2009 TUTORIALS OF THE XXII BRAZILIAN SYMPOSIUM ON, IEEE, PISCATAWAY, NJ, USA, 11 October 2009 (2009-10-11), pages 3 - 16, XP031616868, ISBN: 978-1-4244-4979-8
- SHAWN HARGREAVES: "Combining shaders", 17 August 2009 (2009-08-17), XP055729750, Retrieved from the Internet <URL:http://www.shawnhargreaves.com/blog/combining-shaders.html> [retrieved on 20200910]
- DIETER SCHMALSTIEG ET AL: "Real-time Bounding Box Area Computation", 1 June 1999 (1999-06-01), XP055729701, Retrieved from the Internet <URL:https://www.cg.tuwien.ac.at/research/publications/1999/Fuhr-1999-Conc/TR-186-2-99-05Paper.pdf> [retrieved on 20200910]
- WATT A: "3D Computer Graphics,passage", 3D COMPUTER GRAPHICS, XX, XX, 1 January 2000 (2000-01-01), pages 123 - 135, 142, XP002352223
- ANONYMOUS: "8.4 - Viewports - LearnWebGL", 8 March 2016 (2016-03-08), XP055729723, Retrieved from the Internet <URL:http://learnwebgl.brown37.net/08_projections/projections_viewport.html> [retrieved on 20200910]

## Description

### Cross Reference to Related Applications

This application claims priority from U.S. Patent Application Nos. 16/262,879, 16/262,880, and 16/262,881, each filed on January 30, 2019 and are titled, "Viewability Metrics of a Multidimensional Object in a Multidimensional Digital Environment," "Texture Based Pixel Count Determination," and "Geometric Area Of Projection Of A Multidimensional Object In A Viewport Space," respectively.

### Technical Field

Embodiments of the present invention relates generally to data collection for the purposes of analytics in computer generated (or simulated) multidimensional digital environments. More particularly, embodiments of the invention relate to determine metrics of viewability of a multidimensional digital object within a multidimensional digital environment.

### Background of the Invention

Multi-dimensional computer generated or simulated environments are utilized in many different fields that use computer aided visualization techniques. Examples can include the industries related to gaming, medical, training, financial, advertising, real-estate, or any field that involves using virtual reality, augmented reality, mixed reality, three dimensional digital objects. An important aspect of any of the above identified fields can include collection of data based on visibility of a multidimensional digital object residing within the multidimensional digital environment. However, currently known embodiments are inefficient or inaccurately collect such data and subsequently can result in inaccurate analytics determination. Therefore, what is needed are systems, methods, and techniques that can overcome the above identified limitations and accurately collect data related to visibility of the multidimensional digital object within the multidimensional digital environment. Computer-generated and simulated multidimensional environments utilize various rendering and graphics processing techniques. Reference is made to Anonymous, 'How to calculate screen area coverage of a 3D object,' Unity Community, 21 April 2014, retrieved from: https://answers.unity.com/questions/691066/how-to-calculate-screen-area-coverage-of-a-3d-obje.html [retrieved 2020-06-15], which discusses rendering techniques in computer-generated environments, and to Naga K. Govindaraju et al., 'Fast computation of database operations using graphics processors,' 31 July 2005, DOI: 10.1145/1198555.1198787, which discusses graphics processing operations.

### Summary of Invention

A system of one or more computers can be configured to perform particular operations or actions by virtue of having software, firmware, hardware, or a combination thereof installed on the system that in operation causes or cause the system to perform the actions described herein. One or more computer programs can be configured to perform particular operations or actions by virtue of including instructions that, when executed by data processing apparatus, cause the apparatus to perform the actions described herein.

In one embodiment, a system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect includes a system to determine a metric of viewability of an object of interest (virtual/digital asset) in an electronically generated multidimensional digital environment displayed on graphical user interface by rendering a viewport of the multidimensional digital environment displayed on the graphical user interface, where the viewport includes the object of interest, and where the object of interest includes a multidimensional digital object, and where the object of interest is rendered with a first set of colors. Thereafter the system can be configured to determine a first number of pixels, the first number of pixels representing a total number of pixels in the first set of colors. The system can also determine a second number of pixels in the viewport, the second number representing a total number of pixels of the viewport, and calculate a first ratio by dividing the first number of pixels by the second number of pixels. The system is characterized in that the pixels associated with the object of interest are rendered in a first pass of a multi-pass rendering pipeline of the scene to determine first depth information, and wherein the total number of pixels of the viewport are rendered in a second pass of the multi-pass rendering pipeline of the scene to determine second depth information, and wherein the pixels that have equal first and second depth information are rendered with the first set of colors.

Other embodiments of this aspect include corresponding computer systems, apparatus, and computer programs recorded on one or more computer storage devices, each configured to perform the actions of the methods.

Embodiments can include one or more of the following features. The system can include determining a geometrical area of projection (GAP) of the object of interest on the viewport, where the GAP includes the total area projected by the object of interest in a normalized viewport space, and calculating a second ratio by dividing the first ratio by the GAP. The system can further be configured to determine the GAP of the object of interest on the viewport by projecting vertices of the object of interest from world coordinates to the normalized viewport space. The system can also be configured to calculate a total area projected by the vertices of the object of interest in the normalized viewport space. In one embodiment, the normalized viewport space is represented by a normalized two dimensional (2D) coordinate system.

The system can be further configured to determine the total area projected by the vertices of the first set of colors the processing system by calculating an area of each face of the object of interest projected by the vertices of the first set of colors in the normalized viewport space and performing a summation of the area of each face projected by the vertices of the first set of colors in the normalized viewport space. The system can be configured to determine objects that are not an object of interest, within the viewport, by rendering such objects with a second set of colors. An object of interest can include a multidimensional bounding box enclosing the multidimensional digital object/asset. The multidimensional bounding box can be of the same number of dimensions as that of the asset it bounds. In one embodiment, the multidimensional digital environment can be at least a three-dimensional environment. In one embodiment, the multidimensional digital object can be at least a three-dimensional digital object. In yet another embodiment, the bounding box is at least three-dimensional and encloses a three dimensional object. Implementations of the described techniques may include hardware, a method or process, or computer software on a computer-accessible medium.

### Brief Description of Drawings

The present invention is illustrated by way of example and not limitation in the figures of the accompanying drawings in which like references indicate similar elements.
FIG. 1 illustrates system 100 configured to determine a metric of visibility of an object of interest in an electronically generated multidimensional digital environment displayed on graphical user interface, according to one embodiment of the invention.
FIG. 2A illustrates diagram 200 describing an object of interest in a viewport of a multidimensional digital environment, according to one embodiment of the invention.
FIG. 2B illustrates diagram 201 describing a rendered object of interest in a viewport of a multidimensional digital environment, according to one embodiment of the invention.
FIG. 3 illustrates diagram 300 describing two objects of interest of the same size with the same orientation and distance and determining a screen coverage ratio of the object of interest relative to the viewport, according to one embodiment of the invention.
FIG. 4A illustrates diagram 400 describing an object of interest in a multidimensional space whose Geometrical Area of Projection needs to be determined, according to one embodiment of the invention.
FIG. 4B illustrates diagram 401 illustrating the Geometrical Area of Projection of an object of interest on a normalized coordinate of the viewport of a multidimensional digital environment, according to one embodiment of the invention.
FIG. 5 illustrates flow diagram 500 describing the operations to determine a metric of viewability of an object of interest in a multidimensional digital environment, according to one embodiment of the invention.
FIG. 6 illustrates flow diagram 600 describing the operations to determine another metric of viewability of an object of interest in a multidimensional digital environment, according to one embodiment of the invention.
FIG. 7 illustrates flow diagram 700 describing the operations to derive the Geometrical Area of Projection of an object of interest in a multidimensional digital environment, according to one embodiment of the invention.
FIG. 8 illustrates flow diagram 800 to determine a total area of all faces projected by the vertices of an object of interest in a normalized two dimensional coordinate system of a viewport, according to one embodiment of the invention.
FIG. 9 illustrates flow diagram 900 to determine an area of each face projected by the vertices of an object of interest, according to one embodiment of the invention.
FIG. 10 is a block diagram illustrating a data processing system such as a computing system 1000, according to one embodiment of the invention.
FIG. 11 illustrates system 1100 configured to method to determine a pixel count of a multidimensional object in a multidimensional digital environment based on a rendered texture, according to one embodiment of the present invention.
FIG. 12 illustrates scene 1200 describing an exemplary multidimensional object in a multidimensional digital environment, according to one aspect of the present invention.
FIG. 13 illustrates rendered scene 1300 which presents a colorized rendering based on texture the multidimensional object displayed in scene 1200, to determine a pixel count of the multidimensional objects in the multidimensional digital environment, according to one aspect of the present invention.
FIG. 14 illustrates flowchart 1400 describing the operations to determine a pixel count of a multidimensional object from the texture of the rendered object, according to one embodiment of the present invention.
FIG. 15 illustrates a system 1500 configured to determine a geometrical area of projection of a multidimensional object displayed on graphical user interface, according to one embodiment of the invention.
FIG. 16 illustrates diagram 1600 describing a multidimensional object in a multidimensional space whose geometrical area of projection needs to be determined, according to one embodiment of the invention.
FIG. 17 illustrates diagram 1700 describing the geometrical area of projection of a multidimensional object on a normalized coordinate of the viewport of a multidimensional environment, according to one embodiment of the invention.
FIG. 18 illustrates diagram 1800 describing a multidimensional object in order to determine the median point of a faces of the object, according to one embodiment of the present invention.
FIG. 19 illustrates diagram 1900 describing the process in determining candidate vertices of a multidimensional object that can be used to determine the geographical area of projection, according to one embodiment of the invention.
FIG. 20 illustrates flow diagram 2000 describing the operations to determine a geometrical area of projection of a multidimensional object, according to one embodiment of the invention.
FIG. 21 illustrates flow diagram 2100 describing the operations to determining whether a face of the multidimensional object is included in the set of visible faces projected on the viewport space, according to one embodiment of the invention.
FIG. 22 illustrates flow diagram 2200 describing the operations to project the vertices of a face to the viewport space, according to one embodiment of the invention.
FIG. 23 illustrates flow diagram 2300 describing the operations to determine a geometrical area of projection of a face of a multidimensional object based on the location of a projected vertex of the face, according to one embodiment of the invention.

### Description of Embodiments

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to "one embodiment" or "an embodiment" or "another embodiment" means that a particular feature, structure, or characteristic described in conjunction with the embodiment can be included in at least one embodiment of the invention. The appearances of the phrase "in one embodiment" in various places in the specification do not necessarily all refer to the same embodiment. The processes depicted in the figures that follow are performed by processing logic that comprises hardware (e.g., circuitry, dedicated logic, etc.), software, or a combination of both. Although the processes are described below in terms of some sequential operations, it should be appreciated that some of the operations described can be performed in a different order. Moreover, some operations can be performed in parallel rather than sequentially.

The following terminology is used herein:
A **screen coverage metric** (also referred to herein as metric of screen coverage) means a measure related to screen coverage of a multidimensional object, on a viewport of a graphical interface (e.g., screen), in a multidimensional digital environment. The metric can be represented as a percentage or ratio. In this regard, screen coverage means a span ratio or percentage of a multidimensional object relative to the viewport displaying the multidimensional digital environment. A viewport is an area (e.g., rectangular or any other geometrical shape) that is expressed in coordinates specific to a rendering device. Therefore, a viewport of a conventional graphical interface displayed on a screen would be the pixels of the screen, and the viewability of an object would be the ratio or percentage an object spans (in pixels) relative to the viewport. Pixel as referred to herein can be a conventional pixel, a Texel (that is, a pixel with a texture element, also referred as texture pixel herein), or any other picture element as known to a person of ordinary skill in the art.

A **visibility metric** (also referred to herein as metric of visibility) means a measure related to the visibility of a multidimensional object, or a portion thereof, on a viewport of a graphical interface, in a multidimensional digital environment. Visibility metric means a measure of visibility of the multidimensional object on the viewport. The metric can be determined as a percentage or ratio. In this regard, visibility of an object means a ratio or percentage of a multidimensional object that is visible to a user or viewer of the viewport of the multidimensional digital environment.

**Metric of viewability** (also referred to herein as viewability metric or viewability metrics) can mean a screen coverage metric, a visibility metric, a combination thereof, or any result derived by an association of the screen coverage metric and the visibility metric.

An **object of interest** is any object whose metric of viewability needs to be determined. In one embodiment, an object of interest can be a multidimensional object displayed within a multidimensional environment. In other embodiments the object of interest can also include a bounding box that encloses the multidimensional object.

A **geometrical area of projection** (GAP) is the total area projected by an object of interest, in a normalized coordinate system, visible on the viewport (normalized viewport space). This can be determined using the vertices projected by the object of interest. When the rendering device includes a conventional graphical interface (e.g., screen) the normalized coordinate system can be represented as a two dimensional coordinate system.

Although exemplary embodiments are explained in a screen coordinate system, the scope of the invention is not intended to be limited to conventional rendering devices (e.g., screens), but can include multidimensional rendering devices, including interfaces required for virtual and augmented reality systems, mixed reality, and three dimensional digital environments.

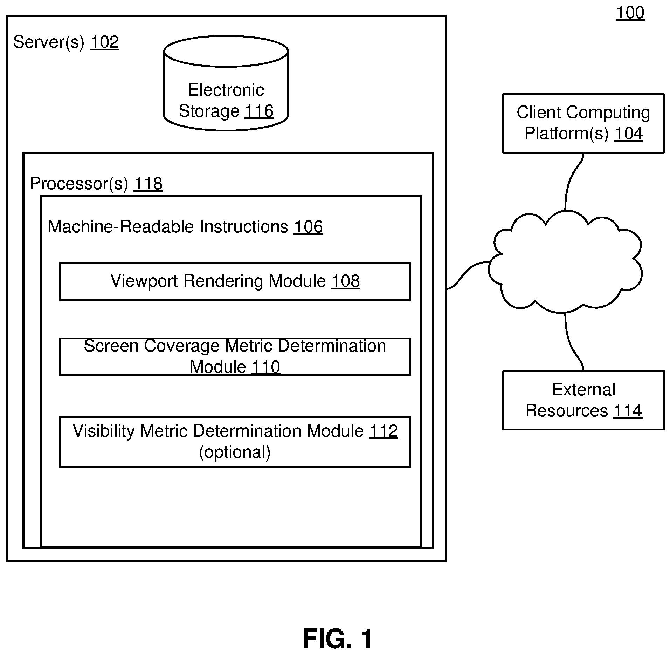

**FIG. 1** illustrates system 100 configured to determine a metric of visibility of an object of interest in an electronically generated multidimensional digital environment displayed on graphical user interface in accordance with one embodiment. In some embodiments, system 100 can include one or more servers 102. Server(s) 102 can be configured to communicate with one or more client computing platforms 104 according to a client/server architecture and/or other architectures. Client computing platform(s) 104 can be configured to communicate with other client computing platforms via server(s) 102 and/or according to a peer-to-peer architecture and/or other architectures. Users can access system 100 via client computing platform(s) 104.

Server(s) 102 can be configured by machine-readable instructions 106. Machine-readable instructions 106 can include one or more instruction modules. The instruction modules can include computer program modules. The instruction modules can include one or more of a Viewport Rendering Module 108, a Screen Coverage Metric Determination Module 110, and optionally a Visibility Metric Determination Module 112, and/or other instruction modules. Visibility Metric Determination Module 112 can, in one embodiment, also include a GAP determination module (not shown).

Viewport Rendering Module 108 can be configured to render a viewport of the multidimensional digital environment displayed on the graphical user interface. The viewport, in this embodiment can include the object of interest. In one embodiment the object of interest can include a multidimensional digital object. In yet other embodiments, the object of interest can also include a bounding box enclosing the multidimensional digital object. In a preferred embodiment, viewport rendering module 108 can render a scene in a multidimensional digital environment by placing an additional camera at the exact same position as the main scene camera using which the scene is viewable to the user. In another embodiment, both the additional camera and the main scene camera can have a same focal length as well.

In one embodiment, module 108 can render the object of interest with a set of colors. The set of colors can be any color that is preconfigured to represent the object of interest. For example, in one embodiment, any or all objects of interest can be rendered in one or more colors (e.g., black, green, white, etc.) while other objects (not considered as an object of interest) can be rendered in a different color to identify the objects of interest from the rest of the rendered viewport or screen. As referred to herein a color is indented to mean a unique shade of a color, which can usually be represented with a unique hexadecimal (hex) color code and/or red, blue, green (RGB) value.

In one embodiment, using the additional camera a render texture can be applied where each object of interest is rendered with a unique color (e.g. green), while other scene features/objects not of interest are rendered in a particular color (e.g., black), to allow screen coverage metric determination module 110 to identify the number of pixels for object of interest on the viewport, as described further herein. Each pixel of can be categorized by color to determine one or more objects of interest and to determine the number of pixels of the viewport used by each object of interest. In one embodiment, Module 108 renders the viewport to a low-resolution image using the additional camera of the multidimensional digital environment, where the camera is at placed at, or approximately at, a position and rotation as that of the current scene camera using which the scene is viewable to the user in the multidimensional digital environment. In one embodiment, the rendered view of the additional camera may be hidden from the user (that is, the user/viewer is able to only see the scene as rendered by the main camera). In this implementation, the main camera is used to display a scene of a multidimensional digital environment to a user or viewer on the viewport whereas the additional camera is exactly overlapped over the main camera so that both cameras render the exact same scene from the same distance and orientation. In one embodiment, both cameras share the same properties (e.g., focal length, angle of view, etc.). In one embodiment, a screenshot/ snapshot of the rendered scene is taken which is then used by screen coverage metric determination module 110 for further processing. In one embodiment, server 102 can be configured to take a screenshot/snapshot at predetermined intervals.

Screen Coverage Metric Determination Module 110 can be configured to determine a total number of pixels representing the objects of interest as well as total number of pixels in the viewport. Thereafter, module 110 can determine the screen coverage metric by dividing the number of pixels used by the object of interest (e.g., based on color) by the total number of pixels in the viewport. This ratio or proportion can represent, or can be used to derive, the metric of screen coverage by the object of interest.

Optional embodiments can includes Visibility Metric Determination Module 112 that can be configured to determine the ratio or percentage of the object of interest on the view port. In one embodiment, module 112 can determine the visibility metric by dividing the screen coverage metric by the GAP. The GAP can be calculated by a GAP determination module that can be optionally be implemented by module 112 or independently by another module.

In one embodiment, the GAP provides an estimate of the hypothetical screen area for the object of interest's projection on the viewport. In one embodiment, the visibility metric can represent the ratio between the actual size (area) of the object of interest that is visible on the screen and its hypothetical maximum. The visibility metric reflects, or takes into consideration, not only parts of the object of interest that are obscured by other objects, but also the part (portion) of the object that is not visible on the viewport. Thus, in one embodiment, a ratio or proportion by module 112, related to visibility of the object of interest can be determined by diving the ratio of screen coverage by the object of interest (as determined by module 110) by the calculated GAP of the object of interest. The ratio or proportion determined by module 112 can represent, or can be used to derived, the visibility metric.

In some embodiments, server(s) 102, client computing platform(s) 104, and/or external resources 114 can be operatively linked via one or more electronic communication links. For example, such electronic communication links can be established, at least in part, via a network such as the Internet and/or other networks. It will be appreciated that this is not intended to be limiting, and that the scope of this disclosure includes embodiments in which server(s) 102, client computing platform(s) 104, and/or external resources 114 can be operatively linked via some other communication media.

A given client computing platform 104 can include one or more processors configured to execute computer program modules. The computer program modules can be configured to enable an expert or user associated with the given client computing platform 104 to interface with system 100 and/or external resources 114, and/or provide other functionality attributed herein to client computing platform(s) 104. By way of non-limiting example, the given client computing platform 104 can include one or more of a desktop computer, a laptop computer, a handheld computer, a tablet computing platform, a NetBook, a Smartphone, a gaming console, and/or other computing platforms. External resources 114 can include sources of information outside of system 100, external entities participating with system 100, and/or other resources. In some embodiments, some or all of the functionality attributed herein to external resources 114 can be provided by resources included in system 100.

Server(s) 102 can include electronic storage 116, one or more processors 118, and/or other components. Server(s) 102 can include communication lines, or ports to enable the exchange of information with a network and/or other computing platforms. Illustration of server(s) 102 in **FIG. 1** is not intended to be limiting. Server(s) 102 can include a plurality of hardware, software, and/or firmware components operating together to provide the functionality attributed herein to server(s) 102. For example, server(s) 102 can be implemented by a cloud of computing platforms operating together as server(s) 102.

Electronic storage 116 can comprise non-transitory storage media that electronically stores information. The electronic storage media of electronic storage 116 can include one or both of system storage that is provided integrally (i.e., substantially non-removable) with server(s) 102 and/or removable storage that is removably connectable to server(s) 102 via, for example, a port (e.g., a USB port, a firewire port, etc.) or a drive (e.g., a disk drive, etc.). Electronic storage 116 can include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 116 can include one or more virtual storage resources (e.g., cloud storage, a virtual private network, and/or other virtual storage resources). Electronic storage 116 can store software algorithms, information determined by processor(s) 118, information received from server(s) 102, information received from client computing platform(s) 104, and/or other information that enables server(s) 102 to function as described herein.

Processor(s) 118 can be configured to provide information processing capabilities in server(s) 102. As such, processor(s) 118 can include one or more of a digital processor, an analog processor, a digital circuit designed to process information, an analog circuit designed to process information, a state machine, and/or other mechanisms for electronically processing information. Although processor(s) 118 is shown in FIG. 1 as a single entity, this is for illustrative purposes only. In some embodiments, processor(s) 118 can include a plurality of processing units. These processing units can be physically located within the same device, or processor(s) 118 can represent processing functionality of a plurality of devices operating in coordination. Processor(s) 118 can be configured to execute modules 108, 110, 112, and/or other modules.

Processor(s) 118 can be configured to execute modules 108, 110, 112, and/or other modules by software; hardware; firmware; some combination of software, hardware, and/or firmware; and/or other mechanisms for configuring processing capabilities on processor(s) 118. As used herein, the term "module" can refer to any component or set of components that perform the functionality attributed to the module. This can include one or more physical processors during execution of processor readable instructions, the processor readable instructions, circuitry, hardware, storage media, or any other components.

It should be appreciated that although modules 108, 110, and/or 112, are illustrated in **FIG. 1** as being implemented within a single processing unit, in embodiments in which processor(s) 118 includes multiple processing units, one or more of modules 108, 110, and/or 112 can be implemented remotely from the other modules. The description of the functionality provided by the different modules 108, 110, and/or 112 described below is for illustrative purposes, and is not intended to be limiting, as any of modules 108, 110, and/or 112, can provide more or less functionality than is described. For example, one or more of modules 108, 110, and/or 112 can be eliminated, and some or all of its functionality can be provided by other ones of modules 108, 110, and/or 112. As another example, processor(s) 118 can be configured to execute one or more additional modules that can perform some or all of the functionality attributed below to one of modules 108, 110, and/or 112.

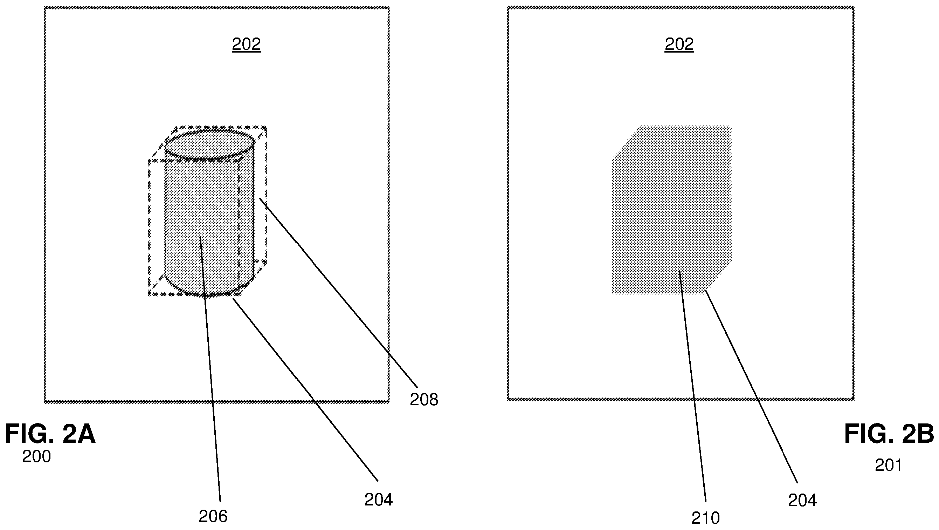

**FIG. 2A** illustrates scene 200 describing an object of interest in a viewport of a multidimensional digital environment, according to one embodiment of the invention. As illustrated, viewport 202 can display, in one embodiment, an object of interest 204. Object of interest 204 can be a multidimensional digital object displayed in a multidimensional digital environment. Object of interest 204 can include asset 206 which can represent the multidimensional digital object and optionally can also include bounding box 208 that encloses asset 206.

**FIG. 2B** illustrates scene 201 describing a rendered object of interest in a viewport of a multidimensional digital environment, according to one embodiment of the invention. As illustrated, in this embodiment, object of interest 204 includes asset 206 and bounding box 208. Object of interest 204 can be rendered with a specific color to differentiate it from the remainder of the objects in viewport 202. Viewport 202 and all other objects that are not considered as an object of interest can be rendered in another color that is different from the specific/unique color used to render object of interest 204. The rendering of object of interest 204 can be projected on the viewport of the multidimensional digital environment as 210, as shown.

In one embodiment, viewport 202 is rendered by an additional camera, in a lower resolution than the main camera that is visible to the user/viewer of the scene. In this embodiment, the scene displayed by the additional camera (e.g., scene 201) remains hidden from the user/viewer. In one embodiment, the additional camera can be used to implement the invention as described herein. The additional camera is overlapped on the main camera that is used to render the scene as viewed by the user/viewer.

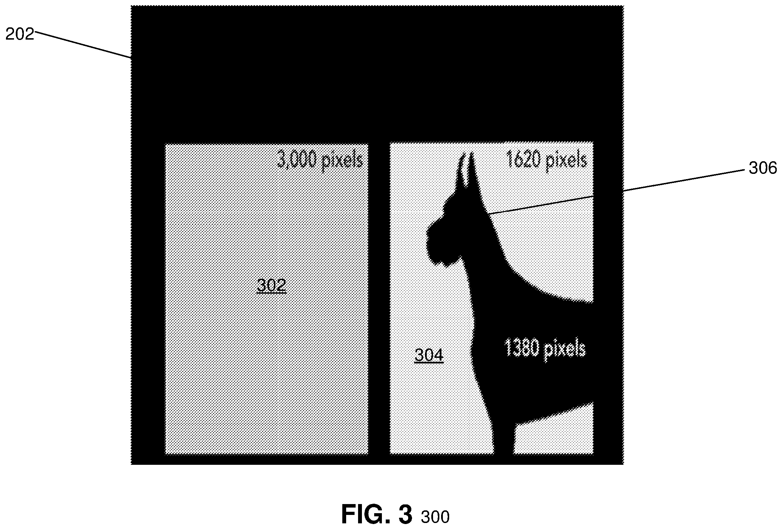

**FIG. 3** illustrates rendered scene 300 describing two objects of interest, 302 and 304, of the same size displayed in viewport 202. In an exemplary embodiment, scene 300 is a low resolution seen rendered with an additional camera located at the same orientation, position, and distance as the main camera that is used to display the rendered scene of the multidimensional digital environment to the user. As illustrated, the camera has an unobstructed view of object of interest 302, while the camera has a partially obstructed view of object of interest 304. As illustrated, another object 306 (that is not an object of interest) partially obstructs the camera's view of object of interest 304. As an example, it is presumed objects of interest 302 and 304 each render 3,000 pixels (when not obstructed by another object) of viewport 202 while object 306 renders 1,380 pixels. However, since the view of object of interest 304 is partially obstructed by object 306, as illustrated, object of interest 304 renders 3,000 - 1,380 = 1,620 pixels of viewport 202. Thus, if it is presumed viewport 202 renders 10,000 pixels in total, screen coverage ratio, **V₁**, of object of interest can be determined as:
${V}_{1} = pixels of object of interest \div total number of pixels in viewport$${V}_{1 \left(object 302\right)} = 3 , 000 \div 10 , 000 = 0.300$${V}_{1 \left(object 304\right)} = 1 , 620 \div 10 , 000 = 0.162$

Thus, in this example, the metric of screen coverage can be determined as 0.3 or 30% for object of interest 302 and 0.162 or 16.2% for object 304. In one embodiment, a system can be configured to set the metric of screen coverage to be zero if the actual calculated screen coverage ratio is below a predetermined threshold. In one embodiment, if the metric of screen coverage is determined to be below a predetermined threshold, the metric can be presumed to be zero (that is, the object of interest is presumed to be not visible on the viewport) despite being visible at least in part.

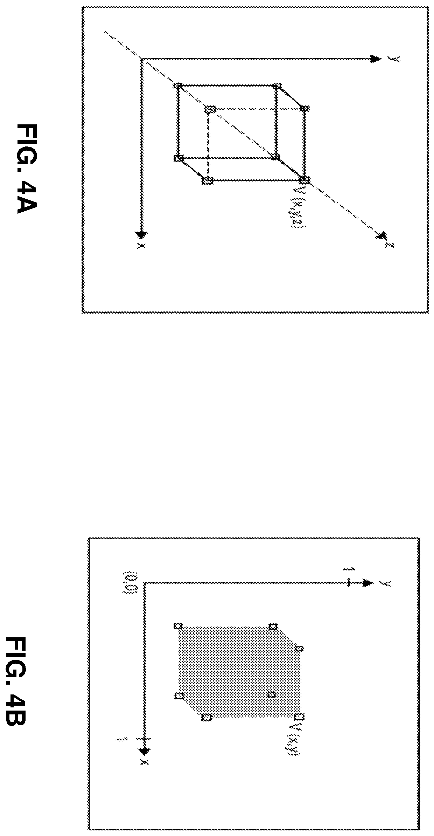

**FIGS. 4A and 4B** illustrate diagrams 400 and 401, respectively, describing an object of interest in a multidimensional space whose Geometrical Area of Projection (GAP) needs to be determined, according to one embodiment of the invention. As illustrated, the GAP is computed by projecting the vertices of the object of interest from world coordinates (e.g., x,y,z coordinates in a three dimensional environment) **(****FIG. 4A****)** to a two dimensional coordinate system **(****FIG. 4B****)** by calculating the area of each face of the object of interest (if visible). In one embodiment, the GAP is calculated by summing the total area of each of the rendered faces of the object of interest in the viewport. Summing the area for each face is used to calculate the maximum theoretical area for the object of interest at the distance and orientation from the camera (from where the scene is rendered).

In one embodiment, the GAP uses normalized viewport coordinates (NVC) to calculate the area of each face of the object of interest. In one embodiment, NVC refers to a viewport space that is represented by a 2D coordinate system. In the NVC, the coordinates can begin with 0,0 as the minimum value and range to 1,1 as the maximum in a two dimensional coordinate system. Thus, in one embodiment, the GAP of the object of interest on the viewport can be determined by projecting the vertices of the object of interest from world coordinates to a normalized viewport space (e.g., NVC system). Thereafter, a total area projected by the vertices of the object of interest in the viewport space.

In one embodiment, the multidimensional digital environment can be represented as a three dimensional space. In this embodiment, to calculate the GAP, the object of interest can be represented as including a bounding box in the shape of a parallelogram. Once the world coordinates are projected in the NVC system, in a 2D space, the object of interest can be represented as having between one and three convex quadrilaterals.

In one embodiment, before projecting faces of a parallelogram, it is determined which face of the parallelogram are currently visible to the camera. In order to define visible faces, the system, in one embodiment, measures the angle between the face's normal and the vector from the camera to the face. In one embodiment, the camera's position to a face's median point is determined. This point is calculated in the viewport coordinate system (model coordinate system).

In one embodiment, the median point (Mₚ ) of the face in a plane (projected on the y axis) can be calculated as:
${M}_{p} = \left(\left({x}_{1}, y, {z}_{1}\right)+\left({x}_{1}, y, {z}_{2}\right)+\left({x}_{2}, y, {z}_{2}\right)+\left({x}_{2}, y, {z}_{1}\right)\right) \div 4$

In one embodiment, a face to be projected in the viewport coordinate system is considered as visible if the angle between face's normal and vector (Cₚ - Mₚ) is between ±90 degrees (that is, between +90 and -90 degrees), where Cₚ is the point where the camera is placed within a three dimensional space. Thereafter, points can be projected from the visible faces to the viewport space. In one embodiment, this operation can be performed using a View Projection matrix (M_{ViewProjection}). Projection of point P from 3D space(P_{3Dspace}) to the viewport space (P_{viewspace}) can be expressed as:
${P}_{viewspace} = {M}_{ViewProjection} \times {P}_{3 Dspace}$
where P_{3Dspace} is homogeneous coordinates of P = (x, y, z, 1). Projection operation itself can be, in one embodiment, the multiplication of matrix on the vector.

In one embodiment, to derive the View Projection matrix the view Projection matrix as used in the rendering pipeline in 3D Engine is used. The View Projection matrix can be determined by using the position/rotation of the camera, Field of View (FOV), screen aspect ratio, camera's far and/or near clip planes.

After each point of the object of interest in the viewport space is projected, one or more polygons can be defined from the projection. The area of each polygon (e.g., triangle, quadrilateral, square, pentagon, hexagon, octagon, etc.) can then be derived. In one embodiment, the sum of all polygons areas that are projected on the viewport space, related to the object of interest, can be considered as the GAP. The polygons can be identified as quadrilaterals, squares, triangles, hexagons, pentagons, etc.

In one embodiment, the GAP can use normalized viewport space based coordinates, where the area [0, 1] for x and y-axes is the viewport (screen). Points projected beyond that range considered as located off the screen. Thus, in this embodiments, GAP is measured related to the screen size and includes a ratio of the area of the object of interest projected on the screen divided by the total area of the screen. Thus, the GAP in a normalized viewport space can be represented as:
$GAP = {S}_{projection} \div {S}_{screen} , where {S}_{screen} = 1$

In one embodiment, the total area projected by the vertices of the object of interest can be determined after rendering the object of interest into a specific (unique) color as previously described herein. In one embodiment, the total area projected by the vertices can include determining a number of faces of the object of interest (identified based on the rendered color of each pixel of the viewport), where each face is determined using a set of vertices projected in the viewport space (e.g., NVC system). Thereafter, the area of each projected face that is visible on the viewport is determined and a summation of the area of each face projected by the vertices is performed.

In one embodiment, to determine whether the faces that are visible on the viewport, based on the color of pixel identified as the object of interest, an angle between a first vector which is perpendicular to the each face and a second vector drawn from camera to a point on the each face is determined. If the angle between the first and second vectors is less than 90 degrees, it is presumed the face is visible on the viewport, otherwise the face is determined to be not visible. An angle of 90 degrees would imply that only an edge of the object is visible. In one embodiment, the second vector is drawn to the center of each identified face. However, it should be noted, any endpoint on the face can be considered. Therefore, the second vector need not be drawn towards the center of the face.

In one embodiment, a visibility metric (**V₂**) can be calculated, or be partially determined, by dividing the screen coverage ratio (**V₁**) by the GAP. Thus, in one embodiment:
${V}_{2} = {V}_{1} \div GAP$

In one embodiment, either **V₁** or **V₂** can be derived into a percentage by multiplying each respective ratio by 100. In one embodiment, the GAP includes the total area projected by the object of interest in the NVC system. In one embodiment, **V₂** can be used to determine or derive the visibility metric. In one embodiment, the viewport can be rendered to a low-resolution image using a camera of the multidimensional digital environment, where the camera is at least one of placed at or approximately placed at a position and rotation/orientation, and has a focal length as that of another camera of the multidimensional digital environment. The other camera used to render the viewport may or may not be visible to a viewer of the multidimensional digital environment. In one embodiment, object of interest includes a bounding box enclosing the multidimensional digital object (asset). In other embodiments, the object of interest may include the bounding box. The methods and techniques described herein can be implemented in an environment having any number of dimensions. Thus, in one embodiment, the multidimensional digital environment is at least a three-dimensional environment, and the multidimensional digital object (asset) is at least a three-dimensional digital object. In yet another embodiment, the asset can be a two dimensional digital object.

In an alternative embodiment, visibility metric (**V₂**) can be determined by using the intersection between the vertices of an object of interest and the frustrum from the camera's field of view. The following calculations can be used to determine the relative percentage of the intersection with the camera's frustrum.${Percentage}_{Object on screen} = {Object}_{Vertices In Frustrum} \div {Object}_{Total Sampled Vertices}$

In one embodiment, a predetermined number of sampled vertices (e.g., 1000 vertices) in the volume of the object of interest are selected. Such selection can be random or at predetermined fix locations. For each of these points/vertices, a computer system can determine whether the point falls within the boundaries of the camera's frustrum. To estimate the ratio of the object that appears in the viewport space, the total number of vertices that call within the frustrum are divided by the total number of sampled vertices for the object of interest (e.g., 1000). In yet another embodiment, if the total number of available vertices in an object is fewer than the predetermined number of sampled points, all available vertices are sampled.

In one embodiment the object of interest can also include a bounding box enclosing the multidimensional digital object. The multidimensional digital environment described herein can be a computer environment with two, three, four, six, twelve, etc. dimensions (but certainly not limited to the mentioned dimensions). Thus, in one embodiment the computer environment described herein is at least a three dimensional environment, and where the multidimensional digital object is at least a two dimensional digital object. In another embodiment the digital object can be up to the same number of dimensions as the computer environment. Therefore, a three dimensional environment can have a digital object having up to three dimensions, a four dimensional environment can have a digital object having up to four dimensions, etc. In one embodiment, the metric of viewability can be further determined from the first ratio in association with the second ratio. In one embodiment, another object, within the viewport, that is not the object of interest can be rendered with preconfigured color(s) that represent any object not considered as the object of interest. In yet another embodiment, the viewport is rendered to a low-resolution image using a low-resolution camera (LRC) of the multidimensional digital environment, where the LRC is at placed at, or approximately at, a position and rotation as that of the main camera of the multidimensional digital environment; the scene rendered by the main camera being viewable by a user/viewer. In one embodiment, the scene rendered by the LRC is not visible to the user. In yet other embodiments the main camera and the LRC can both can have a same focal length as well.

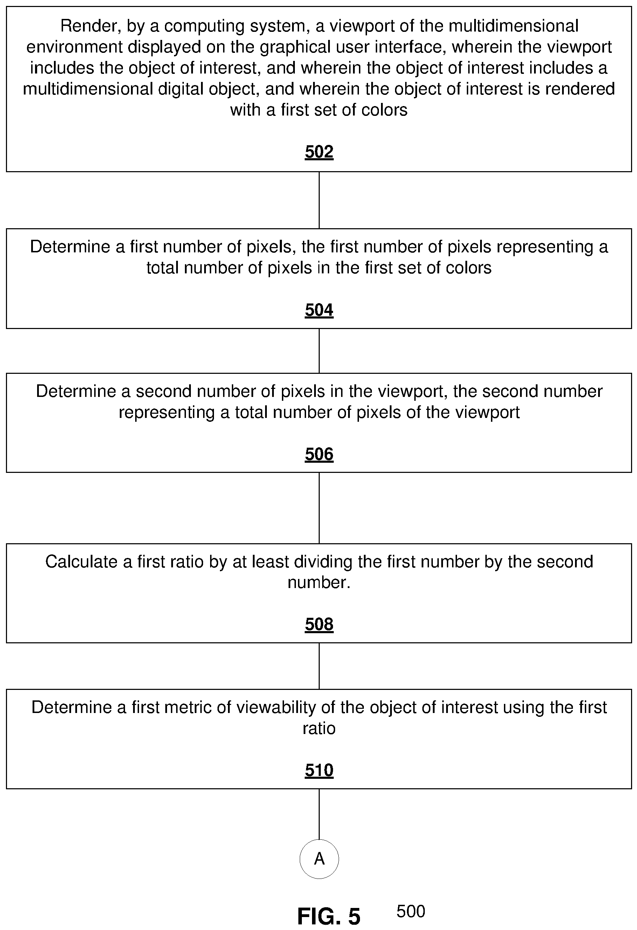

**FIG. 5** illustrates flow diagram 500 describing the operations to determine a metric of viewability of an object of interest in a multidimensional digital environment, according to one embodiment of the invention.

As illustrated, at 502, the operations include rendering a viewport of the multidimensional digital environment displayed on the graphical user interface, where the viewport includes the object of interest. The object of interest can include a multidimensional digital object, and can be rendered by using one or more colors that are preconfigured to be associated with the object of interest. Thereafter, at 504, a total number of pixels projecting the object of interest are determined. This can, in one embodiment, be determined by calculating the total number pixels represented by the one or more preconfigured colors that are associated with the object of interest. At 506, a total number of pixels of the viewport are determined, and at 508, a ratio is calculated by dividing the total number of pixels represented by the object of interest by the total number of pixels in the viewports. The first ratio can then, in one embodiment, represent, or can be used to derive, the metric of screen coverage by the object of interest (**V₁**)as illustrated at 510.

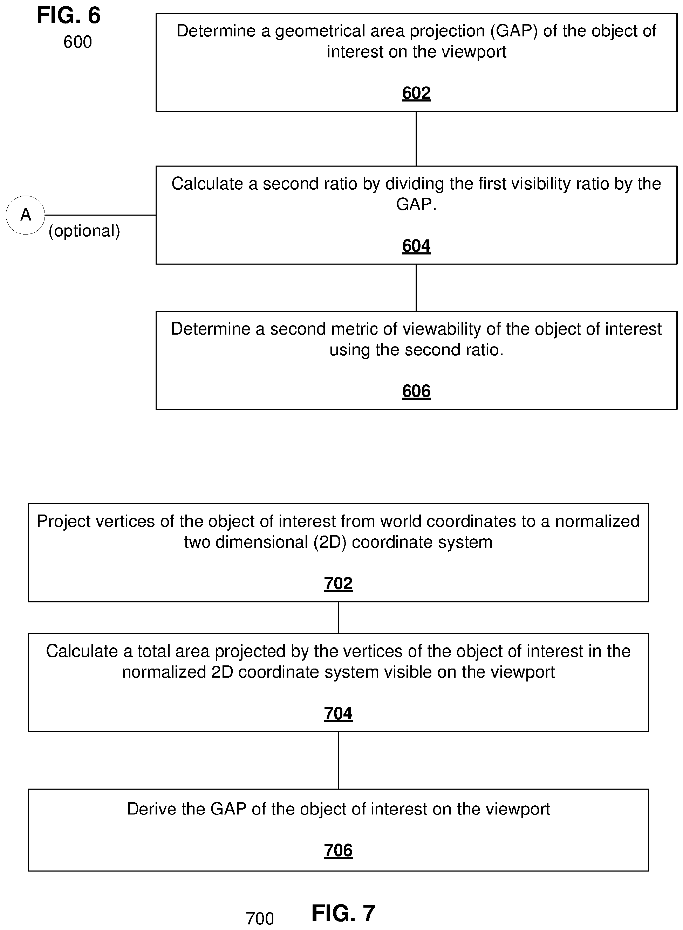

**FIG. 6** illustrates flow diagram 600 describing the operations to determine another metric of viewability of an object of interest in a multidimensional digital environment, according to one embodiment of the invention.

As illustrated, at 602, the GAP of the object of interest on the viewport is determined. At 604, optionally, a second ratio by dividing the first ratio by the GAP can be determined. The second ratio can represent, or can be used to derived, the visibility metric (**V₂**), as illustrated at 606.

**FIG. 7** illustrates flow diagram 700 describing the operations to derive the GAP of an object of interest in a multidimensional digital environment, according to one embodiment of the invention.

As illustrated, at 702, the GAP of the object of interest on the viewport can be determined by projecting vertices of the object of interest from world coordinates to a normalized viewport space (e.g., two dimensional (2D) coordinate system). At 704, a total area projected by the vertices of the object of interest in the normalized 2D coordinate system visible on the viewport can be calculated. At 706, the GAP is determined based on the total area projected by the vertices.

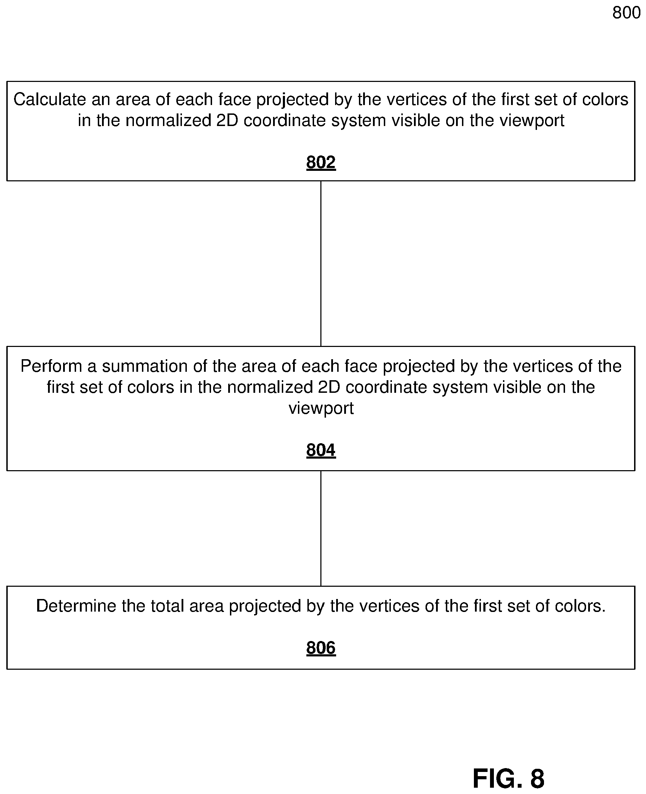

**FIG. 8** illustrates flow diagram 800 to determine a total area of all faces projected by the vertices of an object of interest in a normalized two dimensional coordinate system of a viewport, according to one embodiment of the invention.

As illustrated, at 802, the total area projected by the vertices of each face of the object of interest is determined. In one embodiment, where the object of interest is projected by one or more predefined colors, the vertices are determined by the color(s) of projection in the normalized 2D coordinate system visible on the viewport. Thereafter, a summation of the area of each face projected by the vertices of the color representing the object of interest in the normalized 2D coordinate system visible can be performed to determine the total area projected by the vertices of the first set of colors as illustrated at 804. Thereafter, at 806, the total area projected by the vertices of the object of interest is determined.

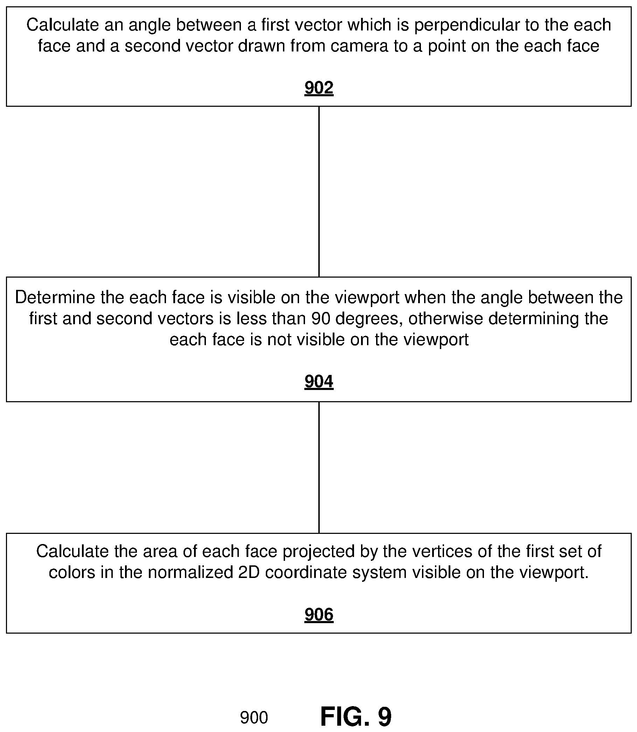

**FIG. 9** illustrates flow diagram 900 to determine an area of each face projected by the vertices of an object of interest, according to one embodiment of the invention.

As illustrated, at 902, an angle between a first vector that is perpendicular to each face and a second vector drawn from a camera of the multidimensional digital environment to a point on that respective face is calculated. At 904, if it is determined that that a face is visible on the viewport when the angle between the first and second vectors is less than ± 90 degrees. If the angle is determined to be ±90 degrees, then it is considered as the edge of the object. Any angle more than ±90 degrees is considered to be not visible on the viewport, as illustrated at 904. At 906, the area of each face projected by the vertices of the color(s) representing the object of interest in the normalized 2D coordinate system that are determined to be visible on the viewport are calculated.

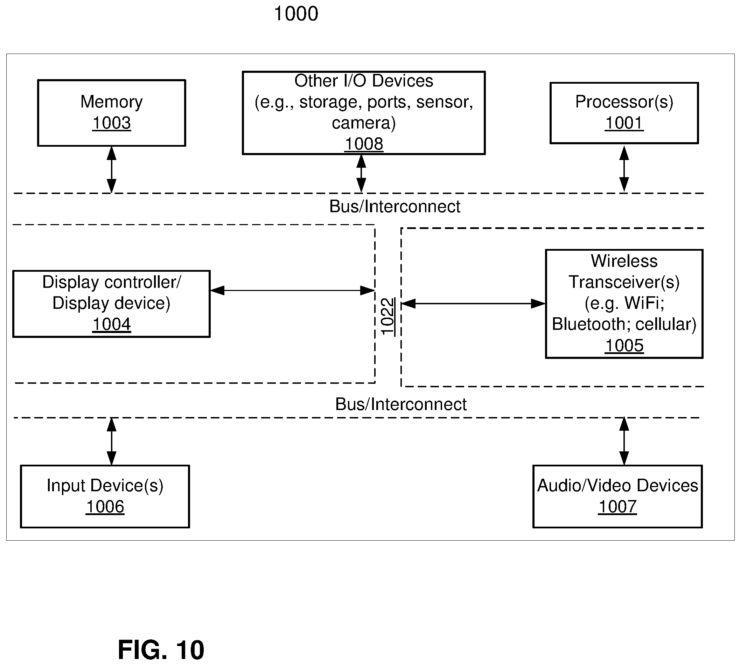

**FIG. 10** is a block diagram illustrating a data processing system such as a computing system 1000 which may be used with one embodiment of the invention. For example, system 1000 can be implemented as part of a system to determine viewability metrics of a multidimensional object in a multidimensional digital environment, texture based pixel count determination (as further described herein), or geometric area of projection of a multidimensional object in a viewport space (as further described herein). It should be apparent from this description that aspects of the present invention can be embodied, at least in part, in software. That is, the techniques may be carried out in a computer system or other computer system in response to its processor, such as a microprocessor, executing sequences of instructions contained in memory, such as a ROM, DRAM, mass storage, or a remote storage device. In various embodiments, hardware circuitry may be used in combination with software instructions to implement the present invention. Thus, the techniques are not limited to any specific combination of hardware circuitry and software nor to any particular source for the instructions executed by the computer system. In addition, throughout this description, various functions and operations are described as being performed by or caused by software code to simplify description. However, those skilled in the art will recognize what is meant by such expressions is that the functions result from execution of the code by a processor.

In one embodiment, system 1000 can represent the server 102. System 1000 can have a distributed architecture having a plurality of nodes coupled through a network, or all of its components may be integrated into a single unit. Computing system 1000 can represent any of the data processing systems described above performing any of the processes or methods described above. In one embodiment, computer system 1000 can be implemented as integrated circuits (ICs), discrete electronic devices, modules adapted to a circuit board such as a motherboard, an add-in card of the computer system, and/or as components that can be incorporated within a chassis/case of any computing device. System 1000 is intended to show a high level view of many components of any data processing unit or computer system. However, it is to be understood that additional or fewer components may be present in certain embodiments and furthermore, different arrangement of the components shown may occur in other embodiments. System 1000 can represent a desktop, a laptop, a tablet, a server, a mobile phone, a programmable logic controller, a personal digital assistant (PDA), a personal communicator, a network router or hub, a wireless access point (AP) or repeater, a set-top box, or a combination thereof.

In one embodiment, system 1000 includes processor 1001, memory 1003, and devices 1005-1008 via a bus or an interconnect 1022. Processor 1001 can represent a single processor or multiple processors with a single processor core or multiple processor cores included therein. Processor 1001 can represent one or more general-purpose processors such as a microprocessor, a central processing unit (CPU), Micro Controller Unit (MCU), etc. Processor 1001 can be a complex instruction set computing (CISC) microprocessor, reduced instruction set computing (RISC) microprocessor, very long instruction word (VLIW) microprocessor, or processor implementing other instruction sets, or processors implementing a combination of instruction sets. Processor 1001 may also be one or more special-purpose processors such as an application specific integrated circuit (ASIC), a cellular or baseband processor, a field programmable gate array (FPGA), a digital signal processor (DSP), a network processor, a graphics processor, a network processor, a communications processor, a cryptographic processor, a co-processor, an embedded processor, or any other type of logic capable of processing instructions. Processor 1001, can also be a low power multi-core processor socket such as an ultra low voltage processor, may act as a main processing unit and central hub for communication with the various components of the system. Such processor can be implemented as a system on chip (SoC).

Processor 1001 is configured to execute instructions for performing the operations and methods discussed herein. System 1000 further includes a graphics interface that communicates with graphics subsystem 1004, which may include a display controller and/or a display device. Processor 1001 can communicate with memory 1003, which in an embodiment can be implemented via multiple memory devices to provide for a given amount of system memory. In various embodiments the individual memory devices can be of different package types such as single die package (SDP), dual die package (DDP) or quad die package (QDP). These devices can in some embodiments be directly soldered onto a motherboard to provide a lower profile solution, while in other embodiments the devices can be configured as one or more memory modules that in turn can couple to the motherboard by a given connector. Memory 1003 can be a machine readable non-transitory storage medium such as one or more volatile storage (or memory) devices such as random access memory (RAM), dynamic RAM (DRAM), synchronous DRAM (SDRAM), static RAM (SRAM), or other types of storage devices such as hard drives and flash memory. Memory 1003 may store information including sequences of executable program instructions that are executed by processor 1001, or any other device. System 1000 can further include IO devices such as devices 1005-1008, including wireless transceiver(s) 1005, input device(s) 1006, audio IO device(s) 1007, and other IO devices 1008.

Wireless transceiver 1005 can be a WiFi transceiver, an infrared transceiver, a Bluetooth transceiver, a WiMax transceiver, a wireless cellular telephony transceiver, a satellite transceiver (e.g., a global positioning system (GPS) transceiver), or other radio frequency (RF) transceivers, network interfaces (e.g., Ethernet interfaces) or a combination thereof. Input device(s) 1006 can include a mouse, a touch pad, a touch sensitive screen (which may be integrated with display device 1004), a pointer device such as a stylus, and/or a keyboard (e.g., physical keyboard or a virtual keyboard displayed as part of a touch sensitive screen). Other optional devices 1008 can include a storage device (e.g., a hard drive, a flash memory device), universal serial bus (USB) port(s), parallel port(s), serial port(s), a printer, a network interface, a bus bridge (e.g., a PCI-PCI bridge), sensor(s) (e.g., a motion sensor such as an accelerometer, gyroscope, a magnetometer, a light sensor, compass, a proximity sensor, etc.), or a combination thereof. Optional devices 1008 can further include an imaging processing subsystem (e.g., a camera), which may include an optical sensor, such as a charged coupled device (CCD) or a complementary metal-oxide semiconductor (CMOS) optical sensor, utilized to facilitate camera functions, such as recording photographs and video clips. Certain sensors can be coupled to interconnect 1022 via a sensor hub (not shown), while other devices such as a keyboard or thermal sensor may be controlled by an embedded controller (not shown), dependent upon the specific configuration or design of system 1000.

To provide for persistent storage of information such as data, applications, one or more operating systems and so forth, in one embodiment, a mass storage (not shown) may also couple to processor 1001. In various embodiments, to enable a thinner and lighter system design as well as to improve system responsiveness, this mass storage may be implemented via a solid state device (SSD). However in other embodiments, the mass storage may primarily be implemented using a hard disk drive (HDD) with a smaller amount of SSD storage to act as a SSD cache to enable non-volatile storage of context state and other such information during power down events so that a fast power up can occur on RE-initiation of system activities. Also a flash device may be coupled to processor 1001, e.g., via a serial peripheral interface (SPI). This flash device may provide for non-volatile storage of system software, including a basic input/output software (BIOS) as well as other firmware of the system.

Note that while system 1000 is illustrated with various components of a data processing system, it is not intended to represent any particular architecture or manner of interconnecting the components; as such details are not germane to embodiments of the present invention. It will also be appreciated that network computers, handheld computers, mobile phones, and other data processing systems which have fewer components or perhaps more components may also be used with embodiments of the invention.

Furthermore, various techniques described in co-pending U.S. Patent Application No. 16/262,880, titled, "Texture Based Pixel Count Determination" and U.S. Patent Application No. 16/262,881, titled, "Geometric Area Of Projection Of A Multidimensional Object In A Viewport Space," filed concurrently herewith, can be implemented in embodiments and/or aspects of the invention described herein; as a result the contents of those patent applications are hereby provided below for the purposes of completeness, to the extent such content is consistent herewith.

### Contents of co-pending U.S. Patent Application No. 16/262,880, titled, "Texture Based Pixel Count Determination"

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to "one embodiment" or "an embodiment" or "another embodiment" means that a particular feature, structure, or characteristic described in conjunction with the embodiment can be included in at least one embodiment of the invention. The appearances of the phrase "in one embodiment" in various places in the specification do not necessarily all refer to the same embodiment. The processes depicted in the figures that follow are performed by processing logic that comprises hardware (e.g., circuitry, dedicated logic, etc.), software, or a combination of both. Although the processes are described below in terms of some sequential operations, it should be appreciated that some of the operations described can be performed in a different order. Moreover, some operations can be performed in parallel rather than sequentially.

Although exemplary embodiments are explained in a screen coordinate system, the scope of the invention is not intended to be limited to conventional rendering devices (e.g., screens), but can include multidimensional rendering devices, including interfaces required for virtual and augmented reality systems.

In one embodiment, visible texture pixels pertaining to an object of interest in a multidimensional digital environment can be determined. An object of interest can be any multidimensional object within the multidimensional digital environment whose pixel count within a viewport needs to be determined. In one embodiment, a multidimensional object can be identified associated with a bounding box enclosing/ encompassing the multidimensional object. In this embodiment, the object of interest can include the bounding box encompassing the multidimensional object.

As referred to herein, a **material** generally defines how an object in a multidimensional environment is rendered. A shader is program, function, or script that determines processing related to each **pixel** in the scene that is rendered, using lighting input and the material configuration. This can include determining color information or depth information related to each pixel. A pixel as referred to herein can be a conventional pixel, a Texel (that is a pixel with a texture element), or any other image/frame element as known to a person of ordinary skill in the art. A texture is an image applied to a surface of any object within the multidimensional digital environment.

In various embodiments, the object of interest can be colored with unique colors. This allows calculating the number of pixels or area for a given color. Since in a multidimensional digital environment multiple objects can seem to be overlapped from the point of view of a camera, the texture gets the final representation of the scene, including objects occlusion and overlapping. Thus, if a user looks directly at the direction of an object of interest placed behind a barrier (e.g., opaque wall), the texture will not include any pixels of the object of interest.

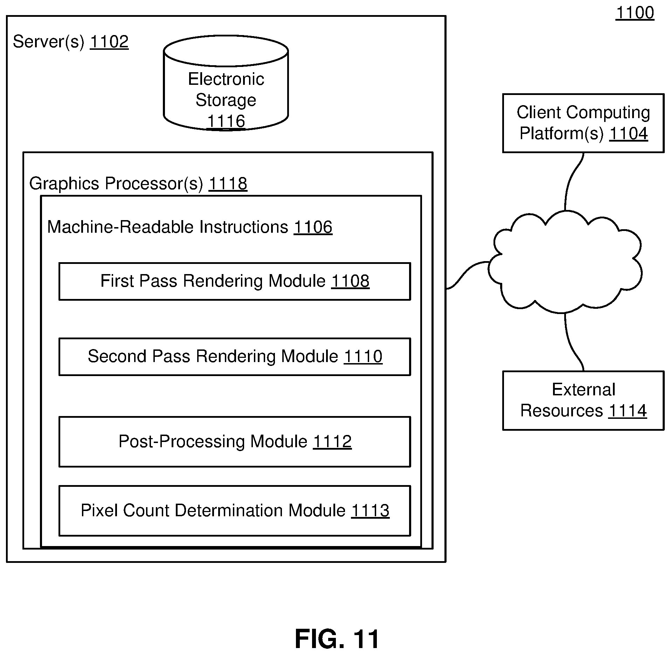

**FIG. 11** illustrates a system 1100 to determine a pixel count of an object of interest in a viewport of an electronically generated multidimensional environment displayed on a graphical user interface, in accordance with one embodiment. In some embodiments, system 1100 can include one or more servers 1102. Server(s) 1102 can be configured to communicate with one or more client computing platforms 1104 according to a client/server architecture and/or other architectures. Client computing platform(s) 1104 can be configured to communicate with other client computing platforms via server(s) 1102 and/or according to a peer-to-peer architecture and/or other architectures. Users can access system 1100 via client computing platform(s) 1104.

Server(s) 1102 can be configured by machine-readable instructions 1106. Machine-readable instructions 1106 can include one or more instruction modules. The instruction modules can include computer program modules. The instruction modules can include one or more of a first pass rendering module 1108, a second pass rendering module 1110, a post-processing module 1112, a pixel count determination module 1113and/or other instruction modules. In one embodiment, the rendering pipeline includes at least two passes (that is the scene is rendered twice).

In this embodiment, first pass rendering module 1108 can be configured to render the objects of interest in a scene to determine a depth mask of the objects of interest during a first pass. A depth mask is a texture that instead of scene colors comprises information about how far objects are placed from the camera. This information can be stored in a depth map, the depth map providing depth information related to each pixel rendered on a scene in the multidimensional digital environment. In one embodiment, during the first pass, only the objects of interests are rendered (that is, the remainder of the scene is not rendered). Thus, the resulting texture comprises depth map of the scene with only the objects of interest. Therefore, in the first pass, the scene does not have any color information. In one embodiment, distance for each pixel of the rendered scene after the first pass is stored (or encoded) in any of the Red, Green, Blue, Alpha (RGBA) components associated with each pixel. In one embodiment, the depth information is stored within the R component of RGBA color information associated with each pixel.

In one embodiment, the first pass involves using a shader that determines the depth map of the scene with only the objects of interest. The shader can, in one embodiment, determine the depth map of the scene using the z-buffer/ depth buffer information of the graphics engine during the first pass rendering. As a non-limiting example, when the depth information is stored in the R component of the RGBA color information, each pixel will have an RGBA value of (depth texture, 0, 0, 0).

Second pass rendering module 1110 can be configured to render the entire scene. At Second Pass the entire scene is rendered with the objects of interest rendered with another shader and material. In one embodiment, this shader can be temporary. This shader can, in one embodiment, draw each object of interest with a unique color in unlit mode. In one embodiment, the unique color associated with an object of interest can be predetermined. In one embodiment, the unique color is assigned at initialization phase, when the object of interest is loaded onto a scene. Since the second pass renders the entire image, the depth texture of each pixel of the scene is determined. In one embodiment, the depth information/ texture of the rendered scene is determined, at least in part, by the z-buffer (depth buffer) maintained by the graphics engine during the rendering.

In one embodiment, a list of assigned colors (that is, colors that have been assigned to objects of interests) are maintained in memory. When an object of interest, which already been assigned a unique color, is unloaded (e.g., when a scene of the multidimensional environment is changed) the assigned color is removed from the list of assigned colors so that it can be reused by other objects of interests, when needed.

Post processing module 1112 can be configured to apply a post-processing filter to determine the unique colors assigned to each object of interest. In one embodiment, the post-processing filter can be implemented using a shader program that can accept a texture as a parameter and return another texture as its output. This shader can be a separate shader or can be the same shader used to render the second pass. The filter can include the depth mask information determined from the first pass.

If the depth of pixel at the second pass depth texture equals to the depth texture determined in the first pass, the pixel is presumed to be that of an object of interest; the pixel color is left with that of the object's second pass texture color. If however, the second pass depth texture does not equal the first pass depth texture, the pixel is presumed to be pertaining to the remainder of the scene and the pixel color is replaced with a predetermined color (e.g., black) that can be used to identify the scene but for the objects of interest. Thus, the objects of interest can be determined based on their unique colors on the rendered texture.

Pixel count module 1113 can be configured to count the number of pixels associated with each unique color to determine a pixel count of each object of interest. A pixel count of each color determines the pixel count of each object of interest.

In any embodiment, the ability of an Applications Programming Interface (API) associated with a graphics processor can be used to render the image to the target texture as explained above. In any embodiment, a texture with low resolution and very low graphical settings can be used for optimization purposes. In one embodiment, scene light, transparent or semi-transparent objects are not considered for optimization purposes.

In some embodiments, server(s) 1102, client computing platform(s) 1104, and/or external resources 1114 can be operatively linked via one or more electronic communication links. For example, such electronic communication links can be established, at least in part, via a network such as the Internet and/or other networks. It will be appreciated that this is not intended to be limiting, and that the scope of this disclosure includes embodiments in which server(s) 1102, client computing platform(s) 1104, and/or external resources 1114 can be operatively linked via some other communication media.

A given client computing platform 1104 can include one or more processors configured to execute computer program modules. The computer program modules can be configured to enable an expert or user associated with the given client computing platform 1104 to interface with system 1100 and/or external resources 1114, and/or provide other functionality attributed herein to client computing platform(s) 1104. By way of non-limiting example, the given client computing platform 104 can include one or more of a desktop computer, a laptop computer, a handheld computer, a tablet computing platform, a NetBook, a Smartphone, a gaming console, and/or other computing platforms. External resources 1114 can include sources of information outside of system 1100, external entities participating with system 1100, and/or other resources. In some embodiments, some or all of the functionality attributed herein to external resources 1114 can be provided by resources included in system 1100.

Server(s) 1102 can include electronic storage 1116, one or more processors 1118, and/or other components. Server(s) 1102 can include communication lines, or ports to enable the exchange of information with a network and/or other computing platforms. Illustration of server(s) 1102 in **FIG. 11** is not intended to be limiting. Server(s) 1102 can include a plurality of hardware, software, and/or firmware components operating together to provide the functionality attributed herein to server(s) 1102. For example, server(s) 1102 can be implemented by a cloud of computing platforms operating together as server(s) 1102.

Electronic storage 1116 can comprise non-transitory storage media that electronically stores information. The electronic storage media of electronic storage 1116 can include one or both of system storage that is provided integrally (i.e., substantially non-removable) with server(s) 1102 and/or removable storage that is removably connectable to server(s) 1102 via, for example, a port (e.g., a USB port, a firewire port, etc.) or a drive (e.g., a disk drive, etc.). Electronic storage 1116 can include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 1116 can include one or more virtual storage resources (e.g., cloud storage, a virtual private network, and/or other virtual storage resources). Electronic storage 1116 can store software algorithms, information determined by processor(s) 1118, information received from server(s) 1102, information received from client computing platform(s) 1104, and/or other information that enables server(s) 1102 to function as described herein.

Processor(s) 1118 can be configured to provide information processing capabilities in server(s) 1102. As such, processor(s) 1118 can include one or more of a digital processor, an analog processor, a digital circuit designed to process information, an analog circuit designed to process information, a state machine, and/or other mechanisms for electronically processing information. Although processor(s) 1118 is shown in FIG. 1 as a single entity, this is for illustrative purposes only. In some embodiments, processor(s) 1118 can include a plurality of processing units. These processing units can be physically located within the same device, or processor(s) 1118 can represent processing functionality of a plurality of devices operating in coordination. Processor(s) 1118 can be configured to execute modules 1108, 1110, 1112, 1113, and/or other modules.

Processor(s) 1118 can be configured to execute modules 108, 110, 112, , 113, and/or other modules by software; hardware; firmware; some combination of software, hardware, and/or firmware; and/or other mechanisms for configuring processing capabilities on processor(s) 1118. As used herein, the term "module" can refer to any component or set of components that perform the functionality attributed to the module. This can include one or more physical processors during execution of processor readable instructions, the processor readable instructions, circuitry, hardware, storage media, or any other components.

It should be appreciated that although modules 1108, 1110, 1112, and/or 1113 are illustrated in **FIG. 11** as being implemented within a single processing unit, in embodiments in which processor(s) 1118 includes multiple processing units, one or more of modules 1108, 1110, 1112, and/or 1113 can be implemented remotely from the other modules. The description of the functionality provided by the different modules 1108, 1110, 1112, and/or 1113 described below is for illustrative purposes, and is not intended to be limiting, as any of modules 1108, 1110, 1112, and/or 1113, can provide more or less functionality than is described. For example, one or more of modules 1108, 1110, 1112, and/or 1113 can be eliminated, and some or all of its functionality can be provided by other ones of modules 1108, 1110, 1112, and/or 1113. As another example, processor(s) 118 can be configured to execute one or more additional modules that can perform some or all of the functionality attributed below to one of modules 1108, 1110, 1112, and/or 1113.

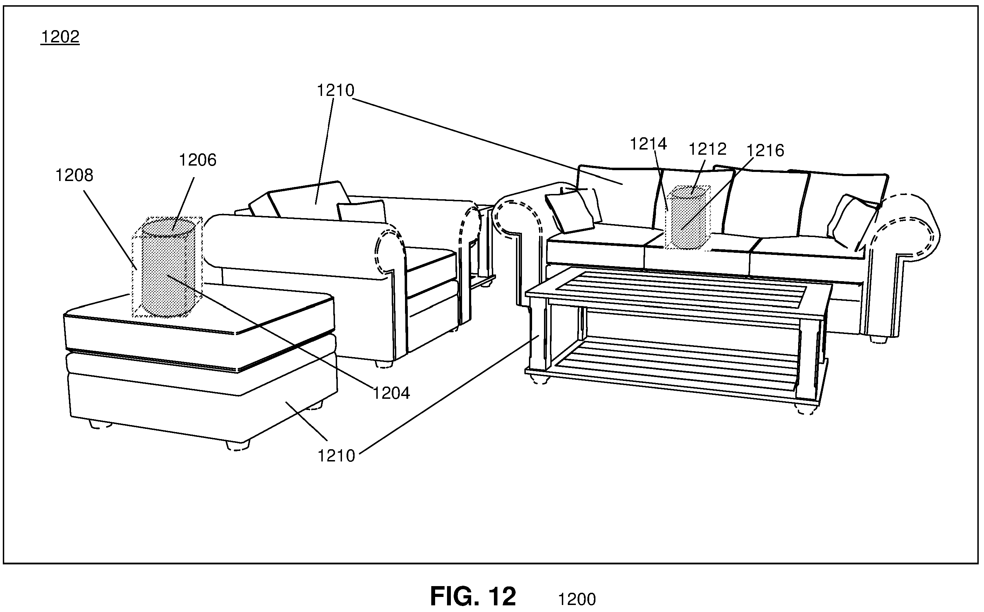

**FIG. 12** illustrates scene 1200 describing an exemplary multidimensional object in a multidimensional digital environment, according to one aspect of the present invention. As illustrated, viewport space 1202, in one embodiment, includes an objects of interest 1204 and 1216. Objects of interest 1204 and 1214 each can be a multidimensional digital object/ asset displayed in a multidimensional digital environment. In yet another embodiment, object of interest 1204 can include multidimensional object 1206 and optionally can also include bounding box 1208 that encloses asset 1206. Similarly, object of interest 1216 can include multidimensional object 1212 and optionally include bounding box 214 that encloses multidimensional object/asset 1212. As illustrated scene 1200 can also include other multidimensional objects 1210 that are not considered as objects of interest (also referred to herein as object not of interest).

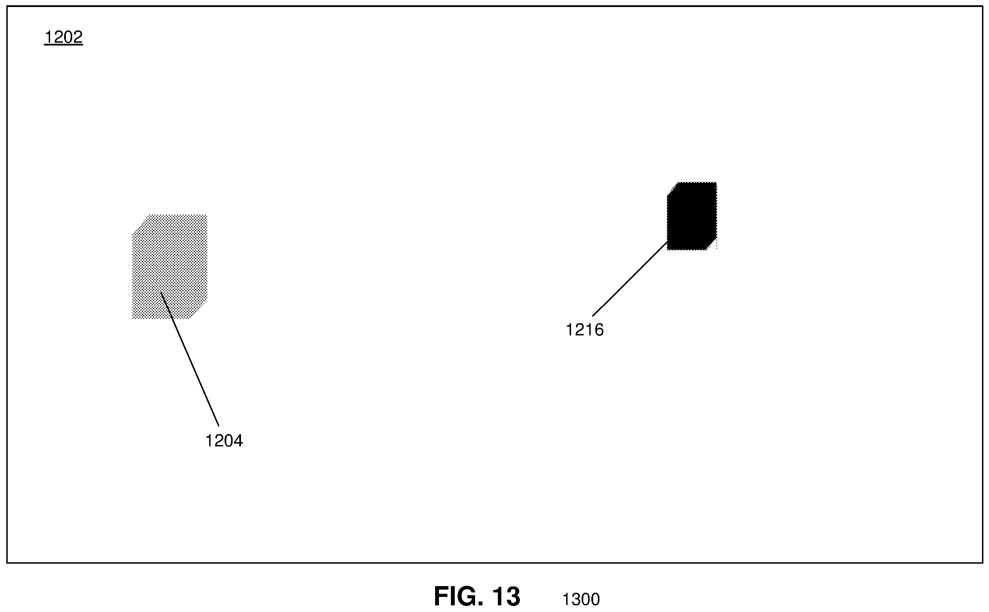

**FIG. 13** illustrates rendered scene 1300 which presents a colorized rendering based on texture the multidimensional object displayed in scene 1200, to determine a pixel count of the multidimensional objects in the multidimensional digital environment, according to one aspect of the present invention. As illustrated, scene 1300 illustrates a rendered version of scene 1200, according to the techniques described herein. Once the scene 1300 is rendered, objects of interest 1204 and 1216 in viewport 1202 can be displayed without objects not of interest 1210. In one embodiment, objects of interest (e.g., 1204 and 1216) can each be assigned a unique color from a color pool comprising set of unique colors (e.g., 65536). Each color can be encoded with 8 bits,16 bits, 32 bits, etc. In a preferred embodiment, each color in the set of colors is encoded with 16 bits for optimization purposes. As referred to herein a unique color is indented to mean a unique shade of a color (which can usually be represented with a unique hexadecimal (hex) color code and/or red, blue, green (RGB) value).

Thus, object of interest 1204 can be rendered with a specific/ unique color (e.g., light gray as illustrated) to identify it from the remainder of the objects in viewport 1202. Similarly, object of interest 1216 can be rendered with a different unique color (e.g., black, as illustrated) so that it can be identified from the remainder of scene 1300 and object of interest 1204. As illustrated in viewport 1202, scene 1300 and all other objects not of interest 1210 can be rendered in another color (e.g., white, as illustrated) that is different from the specific/unique colors used to render objects of interest 1204 and 1216. The rendering of object of interest 1204 can be projected on viewport 1202 of the multidimensional digital environment, as shown.

In one embodiment, scene 1300 is rendered by an additional camera, in a lower resolution than the main camera that renders scene 1200. In this embodiment, scene 1300 displayed by the additional camera remains hidden from the user/viewer. In one embodiment, the additional camera can be used to implement the invention as described herein. The additional camera is overlapped with the main camera that is used to render scene 1200, as viewed by the user/viewer.

**FIG. 4** illustrates flowchart 1400 describing the operations to determine a pixel count of a multidimensional object from the texture of the rendered object, according to one embodiment of the present invention. As illustrated, at 1402, a first pass in a rendering pipeline, by a graphics processor, is performed, where the first pass renders a multidimensional object to determine a first depth information of each pixel of the multidimensional object within a scene in the multidimensional environment, and where the multidimensional object is determined to be the object of interest. At 1404, a second pass in the rendering pipeline is performed, where the second pass includes rendering the scene, and wherein the multidimensional object is rendered in a first predetermined color, and wherein the second pass includes determining a second depth information of each pixel within the scene. At 1406, the first depth information and second depth information for each respective pixel within the scene is compared. At 1408, the color of each respective pixel in the scene is changed to a second predetermined color when its corresponding first depth information and second depth information are different. When the depth information is the same, then it is presumed the pixel is associated/ belongs to an object of interest and the color of the pixel is left untouched. At 1410, a total number of pixels having the first predetermined color are determined.

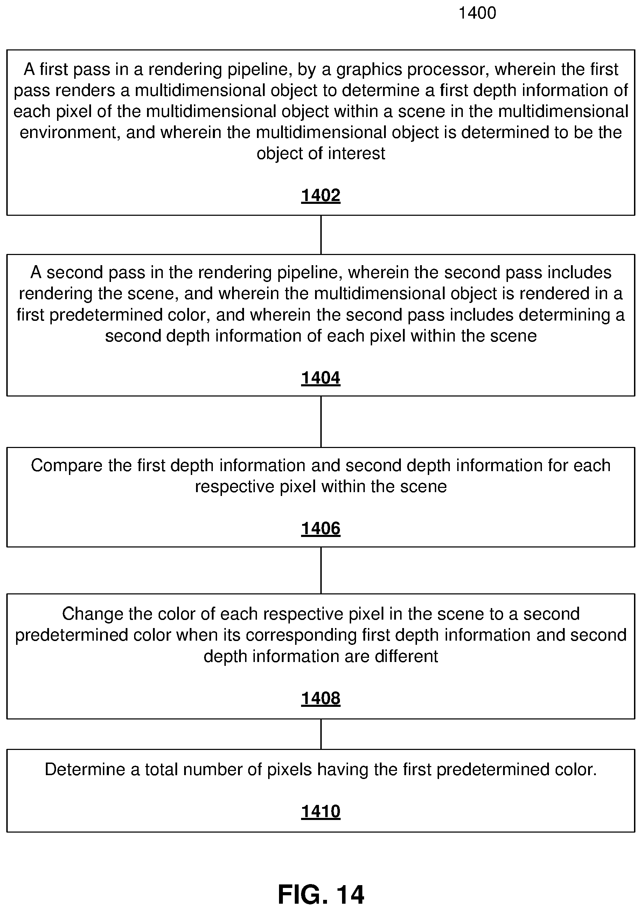

In a different embodiment, a pixel count can be determined with a single pass in the rendering pipeline. In this embodiment, a shader is implemented with a texture to render a scene in the multidimensional digital environment during runtime. This allows a non-intrusive and temporary shader for all objects in the scene. Such a configuration can be applied to a special camera that does not affect the main rendering pipeline and thus the user remains oblivious to the rendering performed by the special camera. The shader can, in one embodiment, render each object of interest with a unique predetermined color passed to it as an input parameter. Each surface or multidimensional setting that is not considered as the object of interest can be rendered in another predetermined color (e.g., black). In another embodiment, the shader can also be implemented to set each pixel of the scene to another predetermined color (e.g., black) when an input parameter is not passed. Any area of an object of interest that is obstructed from view of the camera is rendered with the predetermined color assigned to render each surface that is not considered as the object of interest (that is, the remainder of the scene, for example, black, as above). Since each object of interest can be identified with a unique color, therefore, the rendered scene can have the required color texture demarcating or identifying each object of interest whose pixel count needs to be determined. Any of the techniques described above while describing **Figs.** 11-14 can also be implemented in other embodiments described herein.

### Contents of co-pending U.S. Patent Application No. 16/262,881, titled, "Geometric Area Of Projection Of A Multidimensional Object In A Viewport Space."

A **geometrical area of projection** (GAP) is total area projected by the vertices of a multidimensional virtual object, in a normalized coordinate system, visible on the viewport (normalized viewport space). When the rendering device includes a conventional graphical interface (e.g., screen) the normalized coordinate system can be represented as a two dimensional coordinate system.

Although exemplary embodiments are explained in a screen coordinate system, the scope of the invention is not intended to be limited to conventional rendering devices (e.g., screens), but can include multidimensional rendering devices, including interfaces required for virtual and augmented reality systems.

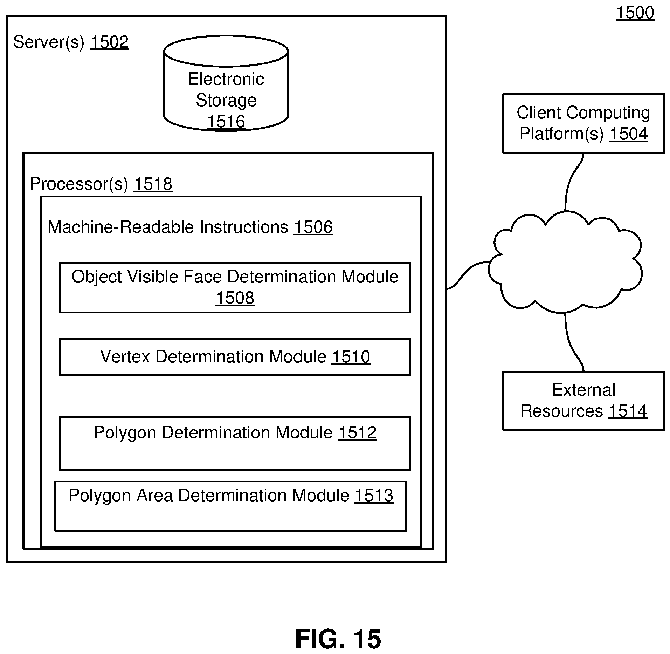

**FIG. 15** illustrates a system 1500 configured to determine a geometrical area of projection of a multidimensional object displayed on graphical user interface, according to one embodiment of the invention.

In some embodiments, system 1500 can include one or more servers 1502. Server(s) 1502 can be configured to communicate with one or more client computing platforms 1504 according to a client/server architecture and/or other architectures. Client computing platform(s) 1504 can be configured to communicate with other client computing platforms via server(s) 1502 and/or according to a peer-to-peer architecture and/or other architectures. Users can access system 100 via client computing platform(s) 1504.

System 1500 can, generally, be used to determine a geometrical area of projection of a multidimensional object. Server(s) 1502 can be configured by machine-readable instructions 1506. Machine-readable instructions 1506 can include one or more instruction modules. The instruction modules can include computer program modules. The instruction modules can include one or more of a object visible face determination module 1508, a vertex determination module 1510, and a Polygon determination module 1512, polygon area determination module 1513, and/or other instruction modules.

In one embodiment, object visible face determination module 1508 can be configured to determine a set of visible faces of the multidimensional object, projected by a camera on a viewport space displayed on a graphical user interface. The multidimensional object can be presented to a user in an electronically generated multidimensional environment.

Vertex determination module 1510 can be configured to determine the vertices, in the coordinate system used by the viewport space, of each visible face of the multidimensional object. In one embodiment, module 1510 can include instructions to project vertices of each face of the multidimensional object that are visible on the viewport space.

Polygon determination module 1512 can be configured to determine the features of each face by determining a number of polygons that can be drawn/projected by the vertices of each face. Module 1512 can include instructions to determine polygons (e.g., quadrilateral, square, triangle, etc.) from the projected vertices.

Polygon area determination module 1513 can be configured to determine an area of each polygon. Thereafter module 1513 can perform a summation of all the areas calculated to determine the GAP of the multidimensional object. In one embodiment, the GAP provides an estimate of the hypothetical screen area for the multidimensional object's projection on the viewport. The GAP determines a ratio of the multidimensional object projection area to the viewport area:
$GAP = \frac{Total Area Of Projection Of Multidimensional Object}{Total Area Of Viewport}$

In some embodiments, server(s) 1502, client computing platform(s) 1504, and/or external resources 1514 can be operatively linked via one or more electronic communication links. For example, such electronic communication links can be established, at least in part, via a network such as the Internet and/or other networks. It will be appreciated that this is not intended to be limiting, and that the scope of this disclosure includes embodiments in which server(s) 1502, client computing platform(s) 1504, and/or external resources 1514 can be operatively linked via some other communication media.

A given client computing platform 1504 can include one or more processors configured to execute computer program modules. The computer program modules can be configured to enable an expert or user associated with the given client computing platform 1504 to interface with system 1500 and/or external resources 1514, and/or provide other functionality attributed herein to client computing platform(s) 1504. By way of non-limiting example, the given client computing platform 1504 can include one or more of a desktop computer, a laptop computer, a handheld computer, a tablet computing platform, a NetBook, a Smartphone, a gaming console, and/or other computing platforms. External resources 1514 can include sources of information outside of system 1500, external entities participating with system 1500, and/or other resources. In some embodiments, some or all of the functionality attributed herein to external resources 1514 can be provided by resources included in system 1500.

Server(s) 1502 can include electronic storage 1516, one or more processors 1518, and/or other components. Server(s) 1502 can include communication lines, or ports to enable the exchange of information with a network and/or other computing platforms. Illustration of server(s) 1502 in **fig. 15** is not intended to be limiting. Server(s) 1502 can include a plurality of hardware, software, and/or firmware components operating together to provide the functionality attributed herein to server(s) 1502. For example, server(s) 1502 can be implemented by a cloud of computing platforms operating together as server(s) 1502.

Electronic storage 1516 can comprise non-transitory storage media that electronically stores information. The electronic storage media of electronic storage 1516 can include one or both of system storage that is provided integrally (i.e., substantially non-removable) with server(s) 1502 and/or removable storage that is removably connectable to server(s) 1502 via, for example, a port (e.g., a USB port, a firewire port, etc.) or a drive (e.g., a disk drive, etc.). Electronic storage 1516 can include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 1516 can include one or more virtual storage resources (e.g., cloud storage, a virtual private network, and/or other virtual storage resources). Electronic storage 1516 can store software algorithms, information determined by processor(s) 1518, information received from server(s) 1502, information received from client computing platform(s) 1504, and/or other information that enables server(s) 1502 to function as described herein.

Processor(s) 1518 can be configured to provide information processing capabilities in server(s) 1502. As such, processor(s) 1518 can include one or more of a digital processor, an analog processor, a digital circuit designed to process information, an analog circuit designed to process information, a state machine, and/or other mechanisms for electronically processing information. Although processor(s) 1518 is shown in FIG. 15 as a single entity, this is for illustrative purposes only. In some embodiments, processor(s) 118 can include a plurality of processing units. These processing units can be physically located within the same device, or processor(s) 1518 can represent processing functionality of a plurality of devices operating in coordination. Processor(s) 1518 can be configured to execute modules 1508, 1510, 1512, and/or other modules.

Processor(s) 1518 can be configured to execute modules 1508, 1510, 1512, and/or other modules by software; hardware; firmware; some combination of software, hardware, and/or firmware; and/or other mechanisms for configuring processing capabilities on processor(s) 1518. As used herein, the term "module" can refer to any component or set of components that perform the functionality attributed to the module. This can include one or more physical processors during execution of processor readable instructions, the processor readable instructions, circuitry, hardware, storage media, or any other components.

It should be appreciated that although modules 1508, 1510, 1512, and/or 1513 are illustrated in **fig. 15** as being implemented within a single processing unit, in embodiments in which processor(s) 1518 includes multiple processing units, one or more of modules 1508, 1510, and/or 1512 can be implemented remotely from the other modules. The description of the functionality provided by the different modules 1508, 1510, 1512, and/or 1513 described below is for illustrative purposes, and is not intended to be limiting, as any of modules 1508, 1510, 1512, and/or 1513, can provide more or less functionality than is described. For example, one or more of modules 1508, 1510, 1512, and/or 1513 can be eliminated, and some or all of its functionality can be provided by other ones of modules 108, 110, 112, and/or 113. As another example, processor(s) 1518 can be configured to execute one or more additional modules that can perform some or all of the functionality attributed below to one of modules 1508, 1510, 1512, and/or 1513.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

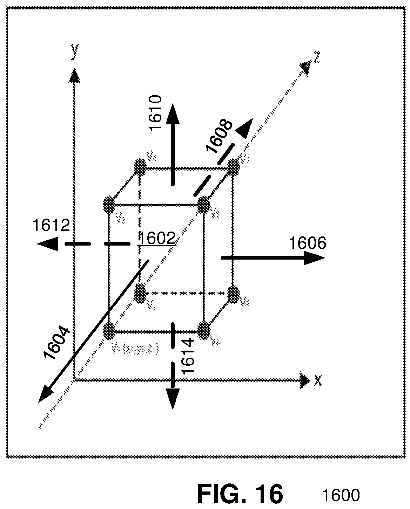

**FIG. 16** illustrates diagram 1600 describing a multidimensional object in a multidimensional space whose geometrical area of projection needs to be determined, according to one embodiment of the invention. As illustrated, multidimensional object 1602 is a 3D object in an Euclidean space having points V₁ through V₈. Face determination module 1508, in one embodiment, determines whether a face of multidimensional object 1602 is visible on the viewport space by projecting a vector normal to each face of the multidimensional object. As illustrated vectors 1604-1614 each represent a normal vector to each respective face/surface of multidimensional object. In this illustration, dashed vectors 1608, 1612, and 1614 indicate that they are not visible from the camera. The vectors can be projected from each outside surface of multidimensional object 1602, thus vector 1608, from the back face of multidimensional object 1602, is projected further away from the camera. Thereafter, another (second) vector (not shown) from the camera to each face is projected. The second vector can be drawn/ projected towards the center of each face from the camera. In another embodiment, the second vector from the camera is drawn/ projected towards a median point of the face of multidimensional object 1602. In yet another embodiment, the second vector can be projected from the face of multidimensional object 1602 towards the camera.

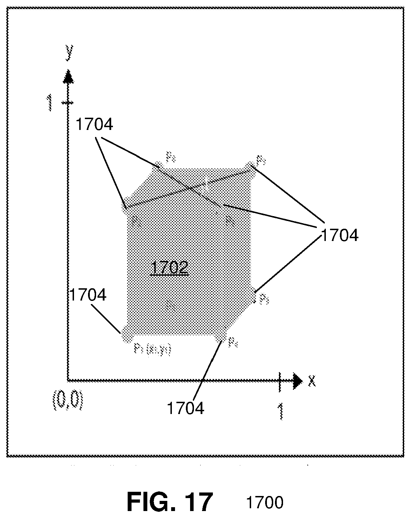

After both vectors are projected on each face, an angle between the first vector and the second vector are determined. In one embodiment, the angle can be determined by a dot product between the first vector and the second vector. In one embodiment, the face is determined to be visible in the viewport space when the angle between the first vector and the second vector is less than ±90 degrees (plus or minus 90 degrees). When the angle is exactly ±90 degrees then only an edge/comer of the face is visible. When the angle is more than ± 90 degrees then the face of the multidimensional object is considered to be not visible. After the visible faces projected on the viewport space are determined, the vertices (in the viewport space coordinate system) of each of the visible face can be determined as illustrated in **fig. 17****.**

**FIG. 17** illustrates diagram 1700 describing the geometrical area of projection of a multidimensional object on a normalized coordinate of the viewport of a multidimensional environment, according to one embodiment of the invention. Once the visible faces are determined the vertices can be projected on the viewport space. This includes determining a view projection matrix, where view represents mapping of world space coordinates to camera space coordinates, and projection represents mapping the camera space coordinates to viewport space coordinates. It is presumed that a mapping of the local multidimensional coordinate space (e.g., three dimensional coordinate system) of the each face into world space coordinates (model matrix) has already been performed. If not, a model view projection matrix is determined instead of a view projection matrix.

Thereafter, homogenous coordinates of each point of the face of the multidimensional object can be derived. In order to derive the homogenous coordinates, the point coordinates are projected with a scaling factor for the projection. For example, for a three dimensional object having point P_{xyz} (that is a point having a *x, y,* and *z* dimensions), the homogenous coordinates can be determined as P_{x,y,z,w}, where *w* represents the scaling factor. When the viewport space is presented on a conventional screen having a normalized coordinate system, *w* is set to 1. Therefore, in this example, the homogenous coordinate of point P_{xyz} in a three dimensional space can be represented as: P_{xyz1}

The projected vertices of each face can then be derived by multiplying the view projection matrix, or model view projection matrix (as the case may be), with the homogenous coordinates. In a three dimensional space this can be represented as:
${Vertex}_{Viewspace} = {Matrix}_{viewprojection} \times {P}_{3 DSpace} ,$ where P_{3DSpace} is homogeneous coordinates of P = (x, y, z, 1).

In one embodiment, the view projection matrix of the rendering pipeline of the graphics engine generating the multidimensional environment (e.g., 3D engine) can be used. The view projection matrix relies on position/rotation of the camera, field of view, screen aspect ratio, and the camera's far and near clip planes. Therefore, a person of ordinary skill in the art would appreciate that the generation of the view projection matrix may vary from one implementation to another.

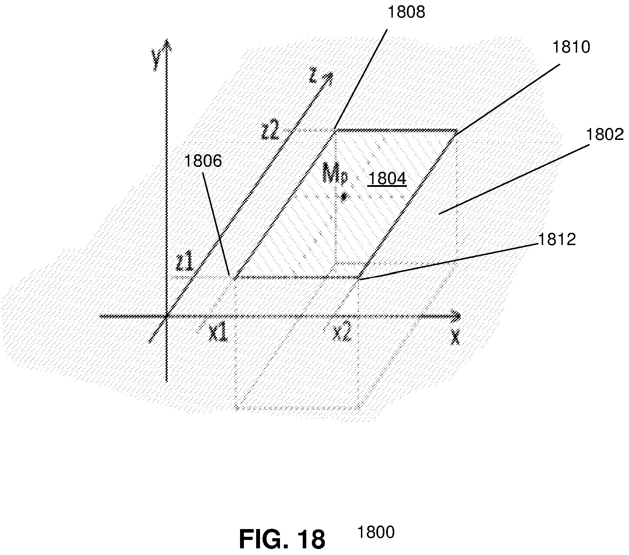

**FIG. 18** illustrates diagram 1800 describing a multidimensional object in order to determine the median point of a faces of the object, according to one embodiment of the present invention. In order to determine the visible faces, as described above, in one embodiment, the vector from the camera to face is determined at the face's median point. In one embodiment, in order to determine the median point of, or an approximation thereof, multidimensional object 1602 is encapsulated within a bounding box 1802, as illustrated. A face 1804 of the bounding box can be selected to determine its median point. As illustrated, face 1804 is a plane on the y axis in a Euclidean space (thus has the same y-dimension) with vertex 1806 (x₁,y,z₁), vertex 1808 (x₁,y,z₂), vertex 1810 (x₂y,z₂) and vertex 1812 (x₂,y,z₁). Face 1804 illustrates a parallelogram and is currently visible to the camera. The median point (Mp ) is then calculated in the face's coordinate system (model coordinate system) as the sum of all the vertex coordinates divided by 4, and is represented as:
$Mp = \frac{Vertex 406 coord . + Vertex 408 coord . + Vertex 410 coord . + Vertex 412 coord .}{4}$

Once the median point is determined, in one embodiment, the second vector can be drawn/projected from the point to the camera (or vice-versa) to determine whether a face is visible as described above.

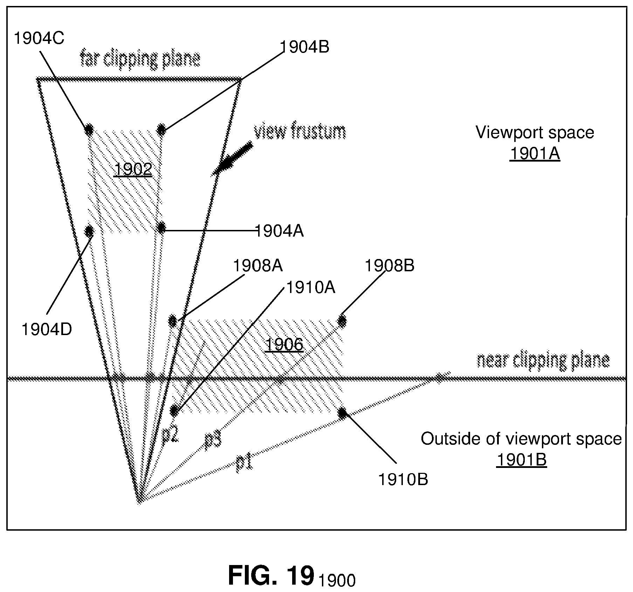

**FIG. 19** illustrates diagram 1900 describing the process in determining candidate vertices of a multidimensional object that can be used to determine the GAP, according to one embodiment of the invention. As illustrated, vertices can be projected inside viewport space 1901A or outside of it (represented as 1901B). The vertices of two objects are projected with face 1902 and face 1906 respectively. All the vertices of face 1902 are projected within viewport space 1901A and are represented as 1904A-D. However, vertex 1908A and 1908B of face 1906 are projected within viewport space 1901A while vertex 1910A and 1910B are projected at outside space 1901B.

In one embodiment, to determine whether a vertex of a face can be used to determine the GAP of multidimensional object 1602, a total number of vertices of face projected inside the viewport space is determined. As illustrated for face 1906, vertices 1910A and 1910B are projected at outside of the viewport space (at 1901B), and 1908A and 1908B are projected within viewport space 1901A. Thereafter, it is determined whether a polygon can be drawn with the vertices projected within viewport space. Since a polygon can be drawn with vertices 1904A-D, those vertices are considered as candidate vertices to determine the area of face 1902, and thus the area of face 1902 is used in determining the GAP of the object corresponding to face 1902.

However, as illustrated, with two vertices only (1908A and 1908B) a polygon cannot be drawn for face 1906. Thus, the area of face 1906 is set to zero and face 1906 is not considered for determining the GAP of the corresponding object. In another example, if 1910B can be projected within viewport space 1901A, three vertices of face 1906 (vertex 1908A, 1908B, and 1910B) can be used to project a triangle. Thus, in such a case, the area of face 1906 can be determined with the area of a triangle comprising the three vertices.

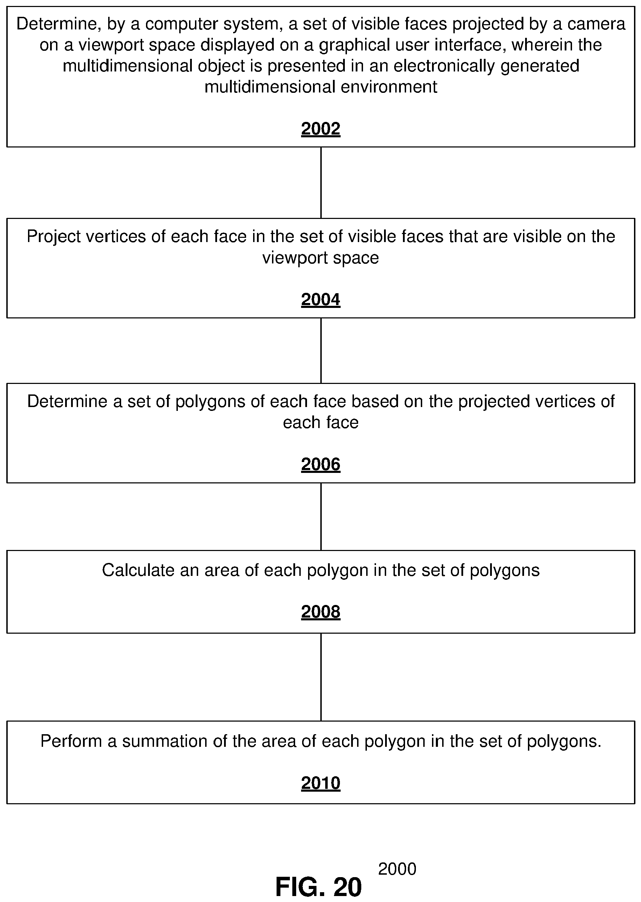

**FIG. 20** illustrates flow diagram 2000 describing the operations to determine a geometrical area of projection of a multidimensional object, according to one embodiment of the invention. As illustrated at operation 2002, a set of visible faces projected by a camera on a viewport space displayed on a graphical user interface is determined, where the multidimensional object is presented in an electronically generated multidimensional environment. Thereafter at operation 2004, the vertices of each face in a set of visible faces that are visible on the viewport space are projected. A set of polygons of each face based on the projected vertices of each face is determined at operation 2006. Then, an area of each polygon in the set of polygons is calculated, as illustrated at 2008. A summation is performed of each area in the set of polygons to determine the GAP of the multidimensional object as illustrated at 2010.

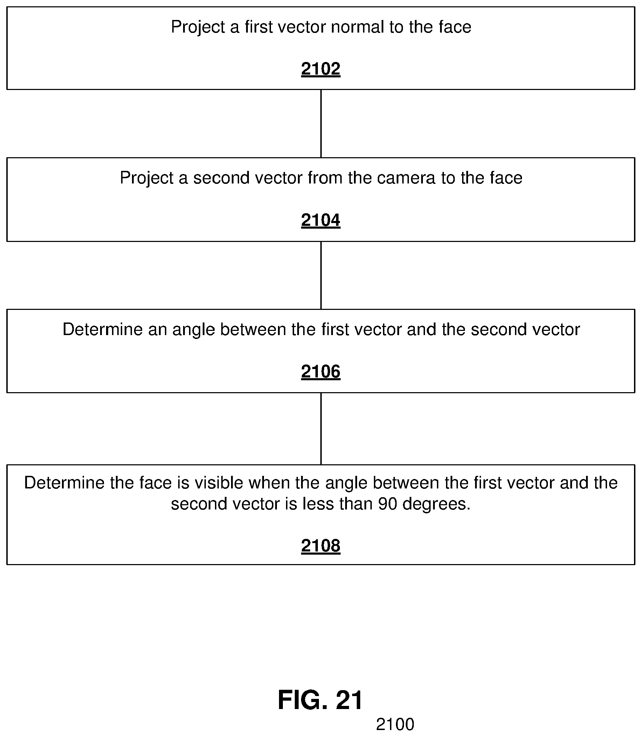

**FIG. 21** illustrates flow diagram 2100 describing the operations to determining whether a face of the multidimensional object is included in the set of visible faces projected on the viewport space, according to one embodiment of the invention. As illustrated at 2102, a first vector normal to the face is projected. At 2104, a second vector from the camera to the face is projected. At 2106, an angle between the first vector and the second vector is determined. At 2108, the face is determined to be visible when the angle between the first vector and the second vector is less than 90 degrees.

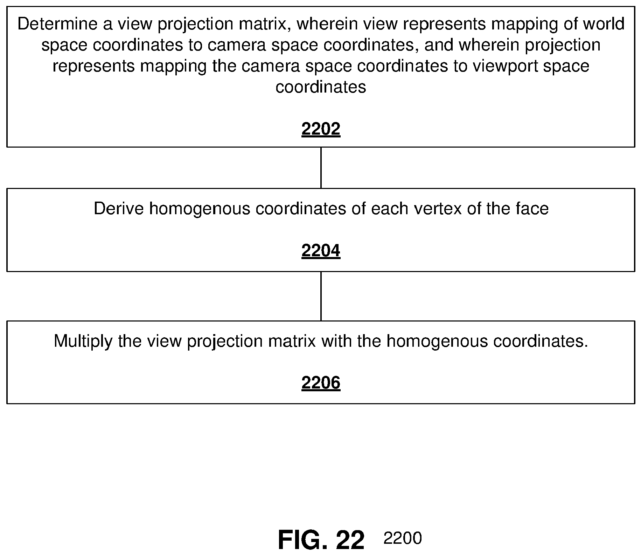

**FIG. 22** illustrates flow diagram 2200 describing the operations to project the vertices of a face to the viewport space, according to one embodiment of the invention. At 2202, a view projection matrix is determined. In a view projection matrix, view represents mapping of world space coordinates to camera space coordinates, and projection represents mapping the camera space coordinates to viewport space coordinates. Thereafter, at 2204, homogenous coordinates of each vertex of the face is derived. At 2206, the view projection matrix and the homogenous coordinates are multiplied.

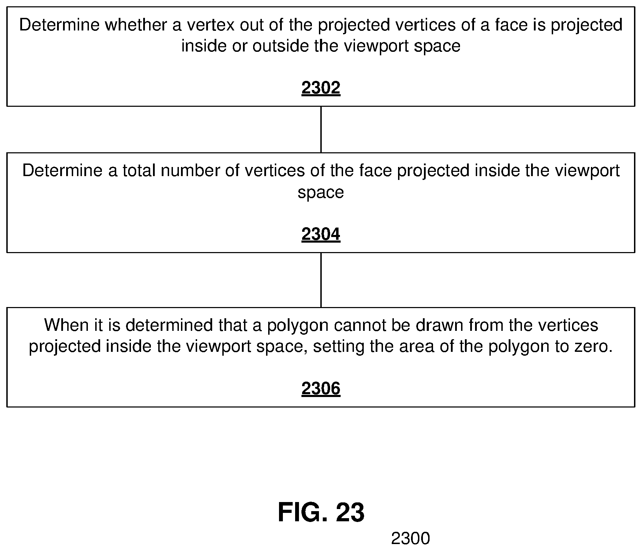

**FIG. 23** illustrates flow diagram 2300 describing the operations to determine a geometrical area of projection of a face of a multidimensional object based on the location of a projected vertex of the face, according to one embodiment of the invention. At 2302, whether a vertex out of the projected vertices of a face is projected inside or outside the viewport space is determined based on the projection. A viewport space, in one embodiment, is equal to the visible viewport to a user. In another embodiment, however, the viewport space can extend beyond the visible are of the viewport to the user. At 2302, a total number of vertices of the face projected inside the viewport space is determined. At 2306, when it is determined that a polygon cannot be drawn from the vertices projected inside the viewport space, the area of the polygon is set to zero.

Thus, methods, apparatuses, and computer readable medium to determine viewability metrics of a multidimensional object in a multidimensional digital environment are described herein. The scope of the invention is defined by the appended claims.

## Claims

1. A system, comprising:
a memory module (116);
a processing system (118, 1118) comprising at least one hardware core coupled to the memory module (116) configured to:
render a viewport (202) of a multidimensional digital environment displayed on a graphical user interface, wherein the viewport (202) includes an object of interest (204) rendered in a scene, and wherein the object of interest (204) includes a multidimensional digital object (206) or a portion thereof, and wherein only the object of interest (204) is rendered with a first set of colors;
determine a first number of pixels rendered with the first set of colors;
determine a second number of pixels in the viewport (202), the second number of pixels representing the total number of pixels of the viewport (202); and
calculate a first ratio by dividing the first number of pixels by the second number of pixels;
**characterised in that**
the pixels associated with the object of interest (204) are rendered in a first pass of a multi-pass rendering pipeline of the scene to determine first depth information, and
wherein the total number of pixels of the viewport (202) are rendered in a second pass of the multi-pass rendering pipeline of the scene to determine second depth information, and
wherein the pixels that have equal first and second depth information are rendered with the first set of colors.

2. The system of claim 1, **characterised in that** the processing system (118, 1118) is further configured to:
determine a geometrical area of projection of the object of interest (204) on the viewport (202) wherein the geometrical area of projection includes a total area projected by the object of interest (204) in a normalized viewport space; and
calculate a second ratio by dividing the first ratio by the geometrical area of projection;
wherein the system determines a metric of viewability of the object of interest (204) from any result derived by an association of the first ratio and the second ratio.

3. The system of claim 2, **characterised in that** to determine the geometrical area of projection of the object of interest (204) on the viewport (202), the processing system (118, 1118) is further configured to:
project vertices of each face of the object of interest (204) from world coordinates to the normalized viewport space; and
calculate the total area of all faces projected by the vertices of the object of interest (204) in the normalized viewport space.

4. The system of claim 3, **characterised in that** to determine the total area projected by the vertices of the first set of colors the processing system (118, 1118) is further configured to:
calculate an area of each face projected by the vertices of the first set of colors in the normalized viewport space; and
perform a summation of the area of each face projected by the vertices of the first set of colors in the normalized viewport space.

5. The system of claim 1, **characterised in that** another object (306), within the viewport (202), is rendered with a second set of colors, the another object (306) not being the object of interest (204).

6. The system of claim 1, **characterised in that** the object of interest (204) includes a multidimensional bounding box (208) enclosing the multidimensional digital object (206).

7. The system of claim 1, **characterised in that** the multidimensional digital environment is at least a three-dimensional environment, and wherein the multidimensional digital object (206) is at least a three-dimensional digital object.

8. A method, comprising:
rendering, by a processing system (118, 1118), a viewport (202) of a multidimensional digital environment displayed on a graphical user interface, wherein the viewport (202) includes an object of interest (204) rendered in a scene, and wherein the object of interest (204) includes a multidimensional digital object (206) or a portion thereof, and wherein only the object of interest (204) is rendered with a first set of colors;
determining, by the processing system (118, 1118), a first number of pixels rendered with the first set of colors;
determining, by the processing system (118, 1118), a second number of pixels in the viewport (202), the second number of pixels representing the total number of pixels of the viewport (202); and
calculating, by the processing system (118, 1118), a first ratio by dividing the first number of pixels by the second number of pixels;
**characterised in that**
the pixels associated with the object of interest (204) are rendered in a first pass of a multi-pass rendering pipeline of the scene to determine first depth information, and
wherein the total number of pixels of the viewport (202) are rendered in a second pass of the multi-pass rendering pipeline of the scene to determine second depth information, and
wherein the pixels that have equal first and second depth information are rendered with the first set of colors.

9. The method of claim 8, **characterised in that**:
determining, by the processing system (118, 1118), a geometrical area of projection of the object of interest (204) on the viewport (202) wherein the geometrical area of projection includes a total area projected by the object of interest (204) in a normalized viewport space; and
calculating, by the processing system (118, 1118), a second ratio by dividing the first ratio by the geometrical area of projection;
wherein the method determines a metric of viewability of the object of interest (204) from any result derived by an association of the first ratio and the second ratio.

10. The method of claim 9, **characterised in that** to determine the geometrical area of projection of the object of interest (204) on the viewport (202), the method further comprises:
projecting, by the processing system (118, 1118), vertices of each face of the object of interest (204) from world coordinates to the normalized viewport space; and
calculating, by the processing system (118, 1118), the total area of all faces projected by the vertices of the object of interest (204) in the normalized viewport space.

11. The method of claim 10, **characterised in that** to determine the total area projected by the vertices of the first set of colors the method further comprises:
calculating, by the processing system (118, 1118), an area of each face projected by the vertices of the first set of colors in the normalized viewport space; and
performing, by the processing system (118, 1118), a summation of the area of each face projected by the vertices of the first set of colors in the normalized viewport space.

12. The method of claim 8, **characterised in that** another object (306), within the viewport (202), is rendered with a second set of colors, the another object (306) not being the object of interest (204).

13. The method of claim 8, **characterised in that** the object of interest (204) includes a multidimensional bounding box (208) enclosing the multidimensional digital object (206).

14. The method of claim 8, **characterised in that** the multidimensional digital environment is at least a three-dimensional environment, and wherein the multidimensional digital object (206) is at least a three-dimensional digital object.

15. A computer readable medium storing instructions which when executed by a data processing system cause the data processing system to perform a method as in any one of claims 8-14.

## Patentansprüche

1. System, umfassend:
ein Speichermodul (116);
ein Verarbeitungssystem (118, 1118), das mindestens einen mit dem Speichermodul (116) verbundenen Hardwarekern umfasst und zu Folgendem konfiguriert ist:
Rendern eines Ansichtsfensters (202) einer mehrdimensionalen digitalen Umgebung, die auf einer grafischen Schnittstelle angezeigt wird, wobei das Ansichtsfenster (202) ein in einer Szene gerendertes Objekt von Interesse (204) einschließt, und wobei das Objekt von Interesse (204) ein mehrdimensionales digitales Objekt (206) oder einen Abschnitt davon einschließt, und wobei ausschließlich das Objekt von Interesse (204) mit einem ersten Farbsatz gerendert wird;
Bestimmen einer ersten Anzahl von Pixeln, die mit dem ersten Farbsatz gerendert werden;
Bestimmen einer zweiten Anzahl von Pixeln im Ansichtsfenster (202), wobei die zweite Anzahl von Pixeln die Gesamtanzahl der Pixel des Ansichtsfensters (202) darstellt; und
Berechnen eines ersten Verhältnisses durch Division der ersten Anzahl von Pixeln durch die zweite Anzahl von Pixeln;
**dadurch gekennzeichnet, dass**
die mit dem Objekt von Interesse (204) verknüpften Pixel in einem ersten Durchlauf einer Mehrdurchlauf-Rendering-Pipeline der Szene gerendert werden, um erste Tiefeninformationen zu bestimmen, und wobei die Gesamtzahl der Pixel des Ansichtsfensters (202) in einem zweiten Durchlauf der Mehrdurchlauf-Rendering-Pipeline der Szene gerendert wird, um zweite Tiefeninformationen zu bestimmen, und wobei die Pixel, deren erste und zweite Tiefeninformationen übereinstimmen, mit dem ersten Farbsatz gerendert werden.

2. System nach Anspruch 1, **dadurch gekennzeichnet, dass** das Verarbeitungssystem (118, 1118) ferner zu Folgendem konfiguriert ist:
Bestimmen einer geometrischen Projektionsfläche des Objekts von Interesse (204) auf das Ansichtsfenster (202), wobei die geometrische Projektionsfläche die Gesamtfläche einschließt, die das Objekt von Interesse (204) in einem normalisierten Ansichtsfensterraum projiziert; und
Berechnen eines zweiten Verhältnisses durch Division des ersten Verhältnisses durch die geometrische Projektionsfläche;
wobei das System aus jedem Ergebnis, das sich aus einer Verknüpfung des ersten Verhältnisses und des zweiten Verhältnisses ergibt, einen Maßstab für die Sichtbarkeit des Objektes von Interesse (204) bestimmt.

3. System nach Anspruch 2, **dadurch gekennzeichnet, dass** das Verarbeitungssystem (118, 1118) zum Bestimmen der geometrischen Projektionsfläche des Objekts von Interesse (204) auf dem Ansichtsfenster (202) ferner zu Folgendem konfiguriert ist:
Projizieren der Eckpunkte jeder Fläche des Objektes von Interesse (204) aus den Weltkoordinaten in den normierten Ansichtsfensterraum; und
Berechnen der Gesamtfläche aller Flächen, die durch die Eckpunkte des Objektes von Interesse (204) im normierten Ansichtsfensterraum projiziert werden.

4. System nach Anspruch 3, **dadurch gekennzeichnet, dass** das Verarbeitungssystem (118, 1118) zum Bestimmen der von den Eckpunkten des ersten Farbsatzes projizierten Gesamtfläche ferner zu Folgendem konfiguriert ist:
Berechnen einer Fläche jeder durch die Eckpunkte des ersten Farbsatzes im normalisierten Ansichtsfensterraum projizierten Fläche; und
Durchführen einer Summierung der Flächen aller durch die Eckpunkte des ersten Farbsatzes im normalisierten Ansichtsfensterraum projizierten Flächen.

5. System nach Anspruch 1, **dadurch gekennzeichnet, dass** ein weiteres Objekt (306) innerhalb des Ansichtsfensters (202) mit einem zweiten Farbsatz gerendert wird, wobei das weitere Objekt (306) nicht das gesuchte Objekt (204) ist.

6. System nach Anspruch 1, **dadurch gekennzeichnet, dass** das Objekt von Interesse (204) einen mehrdimensionalen Begrenzungsrahmen (208) einschließt, der das mehrdimensionale digitale Objekt (206) umschließt.

7. System nach Anspruch 1, **dadurch gekennzeichnet, dass** die mehrdimensionale digitale Umgebung eine mindestens dreidimensionale Umgebung ist und wobei das mehrdimensionale digitale Objekt (206) ein mindestens dreidimensionales digitales Objekt ist.

8. Verfahren, umfassend:
Rendern, durch ein Verarbeitungssystem (118, 1118), eines Ansichtsfensters (202) einer mehrdimensionalen digitalen Umgebung, die auf einer grafischen Schnittstelle angezeigt wird, wobei das Ansichtsfenster (202) ein in einer Szene gerendertes Objekt von Interesse (204) einschließt, und wobei das Objekt von Interesse (204) ein mehrdimensionales digitales Objekt (206) oder einen Abschnitt davon einschließt, und wobei ausschließlich das Objekt von Interesse (204) mit einem ersten Farbsatz gerendert wird;
Bestimmen, durch ein Verarbeitungssystem (118, 1118), einer ersten Anzahl von Pixeln, die mit dem ersten Farbsatz gerendert werden;
Bestimmen, durch ein Verarbeitungssystem (118, 1118), einer zweiten Anzahl von Pixeln im Ansichtsfenster (202), wobei die zweite Anzahl von Pixeln die Gesamtanzahl der Pixel des Ansichtsfensters (202) darstellt; und
Berechnen, durch ein Verarbeitungssystem (118, 1118), eines ersten Verhältnisses durch Division der ersten Anzahl von Pixeln durch die zweite Anzahl von Pixeln;
**dadurch gekennzeichnet, dass**
die mit dem Objekt von Interesse (204) verknüpften Pixel in einem ersten Durchlauf einer Mehrdurchlauf-Rendering-Pipeline der Szene gerendert werden, um erste Tiefeninformationen zu bestimmen, und wobei die Gesamtzahl der Pixel des Ansichtsfensters (202) in einem zweiten Durchlauf der Mehrdurchlauf-Rendering-Pipeline der Szene gerendert wird, um zweite Tiefeninformationen zu bestimmen, und wobei die Pixel, deren erste und zweite Tiefeninformationen übereinstimmen, mit dem ersten Farbsatz gerendert werden.

9. Verfahren nach Anspruch 8, **dadurch gekennzeichnet, dass**:
Bestimmen, durch ein Verarbeitungssystem (118, 1118), einer geometrischen Projektionsfläche des Objekts von Interesse (204) auf das Ansichtsfenster (202), wobei die geometrische Projektionsfläche die Gesamtfläche einschließt, die das Objekt von Interesse (204) in einem normalisierten Ansichtsfensterraum projiziert; und
Berechnen, durch ein Verarbeitungssystem (118, 1118), eines zweiten Verhältnisses durch Division des ersten Verhältnisses durch die geometrische Projektionsfläche;
wobei das Verfahren aus jedem Ergebnis, das sich aus einer Verknüpfung des ersten Verhältnisses und des zweiten Verhältnisses ergibt, einen Maßstab für die Sichtbarkeit des Objektes von Interesse (204) bestimmt.

10. Verfahren nach Anspruch 9, **dadurch gekennzeichnet, dass** das Verfahren zum Bestimmen der geometrischen Projektionsfläche des Objekts von Interesse (204) auf dem Ansichtsfenster (202) ferner Folgendes umfasst:
Projizieren, durch ein Verarbeitungssystem (118, 1118), der Eckpunkte jeder Fläche des Objektes von Interesse (204) aus den Weltkoordinaten in den normierten Ansichtsfensterraum; und
Berechnen, durch ein Verarbeitungssystem (118, 1118), der Gesamtfläche aller Flächen, die durch die Eckpunkte des Objektes von Interesse (204) im normierten Ansichtsfensterraum projiziert werden.

11. Verfahren nach Anspruch 10, **dadurch gekennzeichnet, dass** das Verfahren zum Bestimmen der von den Eckpunkten des ersten Farbsatzes projizierten Gesamtfläche ferner Folgendes umfasst:
Berechnen, durch ein Verarbeitungssystem (118, 1118), einer Fläche jeder durch die Eckpunkte des ersten Farbsatzes im normalisierten Ansichtsfensterraum projizierten Fläche; und
Durchführen, durch ein Verarbeitungssystem (118, 1118), einer Summierung der Flächen aller durch die Eckpunkte des ersten Farbsatzes im normalisierten Ansichtsfensterraum projizierten Flächen.

12. Verfahren nach Anspruch 8, **dadurch gekennzeichnet, dass** ein weiteres Objekt (306) innerhalb des Ansichtsfensters (202) mit einem zweiten Farbsatz gerendert wird, wobei das weitere Objekt (306) nicht das gesuchte Objekt (204) ist.

13. Verfahren nach Anspruch 8, **dadurch gekennzeichnet, dass** das Objekt von Interesse (204) einen mehrdimensionalen Begrenzungsrahmen (208) einschließt, der das mehrdimensionale digitale Objekt (206) umschließt.

14. Verfahren nach Anspruch 8, **dadurch gekennzeichnet, dass** die mehrdimensionale digitale Umgebung eine mindestens dreidimensionale Umgebung ist und wobei das mehrdimensionale digitale Objekt (206) ein mindestens dreidimensionales digitales Objekt ist.

15. Computerlesbares Medium, auf dem Befehle gespeichert sind, die, wenn sie von einem Rechensystem ausgeführt werden, bewirken, dass das Rechensystem ein Verfahren nach einem der Ansprüche 8 bis 14 durchführt.

## Revendications

1. Système, comprenant :
un module mémoire (116) ;
un système de traitement (118, 1118) comprenant au moins un cœur matériel couplé au module mémoire (116) configuré pour :
rendre une fenêtre d'affichage (202) d'un environnement numérique multidimensionnel affiché sur une interface utilisateur graphique, dans lequel la fenêtre d'affichage (202) comporte un objet d'intérêt (204) rendu dans une scène, et dans lequel l'objet d'intérêt (204) comporte un objet numérique multidimensionnel (206) ou une partie de celui-ci, et dans lequel l'objet d'intérêt (204) est rendu avec un premier ensemble de couleurs ;
déterminer un premier nombre de pixels rendus avec le premier ensemble de couleurs,
déterminer un deuxième nombre de pixels dans la fenêtre d'affichage (202), le deuxième nombre de pixels représentant le nombre total de pixels de la fenêtre d'affichage (202) ; et
calculer un premier rapport en divisant le premier nombre de pixels par le deuxième nombre de pixels ;
**caractérisé en ce que**
les pixels associés à l'objet d'intérêt (204) sont rendus lors d'une première passe d'un pipeline de rendu multi-passes de la scène pour déterminer des premières informations de profondeur, et dans lequel la totalité des pixels de la fenêtre d'affichage (202) sont rendus lors d'une deuxième passe du pipeline de rendu multi-passes de la scène pour déterminer des deuxièmes informations de profondeur, et dans lequel les pixels qui présentent des premières et deuxièmes informations de profondeur égales sont rendus avec le premier ensemble de couleurs.

2. Système selon la revendication 1, **caractérisé en ce que** le système de traitement (118, 1118) est en outre configuré pour :
déterminer une aire de projection géométrique de l'objet d'intérêt (204) sur la fenêtre d'affichage (202), dans lequel l'aire de projection géométrique comporte une aire totale projetée par l'objet d'intérêt (204) dans un espace de fenêtre d'affichage normalisé ; et
calculer un deuxième rapport en divisant le premier rapport par l'aire de projection géométrique ;
dans lequel le système détermine un paramètre de visibilité de l'objet d'intérêt (204) à partir de tout résultat dérivé d'une association du premier rapport et du deuxième rapport.

3. Système selon la revendication 2, **caractérisé en ce que**, afin de déterminer l'aire de projection géométrique de l'objet d'intérêt (204) sur la fenêtre d'affichage (202), le système de traitement (118, 1118) est en outre configuré pour :
projeter des sommets de chaque face de l'objet d'intérêt (204) à partir de coordonnées réelles dans l'espace de fenêtre d'affichage normalisé ; et
calculer l'aire totale de toutes les faces projetées par les sommets de l'objet d'intérêt (204) dans l'espace de fenêtre d'affichage normalisé.

4. Système selon la revendication 3, **caractérisé en ce que**, afin de déterminer l'aire totale projetée par les sommets du premier ensemble de couleurs, le système de traitement (118, 1118) est en outre configuré pour :
calculer une aire de chaque face projetée par les sommets du premier ensemble de couleurs dans l'espace de fenêtre d'affichage normalisé ; et
effectuer une addition de l'aire de chaque face projetée par les sommets du premier ensemble de couleurs dans l'espace de fenêtre d'affichage normalisé.

5. Système selon la revendication 1, **caractérisé en ce qu'**un autre objet (306), à l'intérieur de la fenêtre d'affichage (202), est rendu avec un deuxième ensemble de couleurs, l'autre objet (306) n'étant pas l'objet d'intérêt (204).

6. Système selon la revendication 1, **caractérisé en ce que** l'objet d'intérêt (204) comporte une boîte englobante multidimensionnelle (208) renfermant l'objet numérique multidimensionnel (206).

7. Système selon la revendication 1, **caractérisé en ce que** l'environnement numérique multidimensionnel est au moins un environnement tridimensionnel, et dans lequel l'objet numérique multidimensionnel (206) est au moins un objet numérique tridimensionnel.

8. Procédé comprenant :
le rendu, par un système de traitement (118, 1118), d'une fenêtre d'affichage (202) d'un environnement numérique multidimensionnel affiché sur une interface utilisateur graphique, dans lequel la fenêtre d'affichage (202) comporte un objet d'intérêt (204) rendu dans une scène, et dans lequel l'objet d'intérêt (204) comporte un objet numérique multidimensionnel (206) ou une partie de celui-ci, et dans lequel l'objet d'intérêt (204) est rendu avec un premier ensemble de couleurs ;
la détermination, par le système de traitement (118, 1118), d'un premier nombre de pixels rendus avec le premier ensemble de couleurs ;
la détermination, par le système de traitement (118, 1118), d'un deuxième nombre de pixels dans la fenêtre d'affichage (202), le deuxième nombre de pixels représentant le nombre total de pixels de la fenêtre d'affichage (202) ; et
le calcul, par le système de traitement (118, 1118), d'un premier rapport en divisant le premier nombre de pixels par le deuxième nombre de pixels ;
**caractérisé en ce que**
les pixels associés à l'objet d'intérêt (204) sont rendus lors d'une première passe d'un pipeline de rendu multi-passes de la scène pour déterminer des premières informations de profondeur, et dans lequel la totalité des pixels de la fenêtre d'affichage (202) sont rendus lors d'une deuxième passe du pipeline de rendu multi-passes de la scène pour déterminer des deuxièmes informations de profondeur, et dans lequel les pixels qui présentent des premières et deuxièmes informations de profondeur égales sont rendus avec le premier ensemble de couleurs.

9. Procédé selon la revendication 8, **caractérisé en ce que** :
la détermination, par le système de traitement (118, 1118), d'une aire de projection géométrique de l'objet d'intérêt (204) sur la fenêtre d'affichage (202), dans lequel l'aire de projection géométrique comporte une aire totale projetée par l'objet d'intérêt (204) dans un espace de fenêtre d'affichage normalisé ; et
le calcul, par le système de traitement (118, 1118), d'un deuxième rapport en divisant le premier rapport par l'aire de projection géométrique ;
dans lequel le procédé détermine un paramètre de visibilité de l'objet d'intérêt (204) à partir de tout résultat dérivé d'une association du premier rapport et du deuxième rapport.

10. Procédé selon la revendication 9, **caractérisé en ce que**, afin de déterminer l'aire de projection géométrique de l'objet d'intérêt (204) sur la fenêtre d'affichage (202), le procédé comprend en outre :
la projection, par le système de traitement (118, 1118), de sommets de chaque face de l'objet d'intérêt (204) à partir de coordonnées réelles dans l'espace de fenêtre d'affichage normalisé ; et
le calcul, par le système de traitement (118, 1118), de l'aire totale de toutes les faces projetées par les sommets de l'objet d'intérêt (204) dans l'espace de fenêtre d'affichage normalisé.

11. Procédé selon la revendication 10, **caractérisé en ce que**, afin de déterminer l'aire totale projetée par les sommets du premier ensemble de couleurs, le procédé comprend en outre :
le calcul, par le système de traitement (118, 1118), d'une aire de chaque face projetée par les sommets du premier ensemble de couleurs dans l'espace de fenêtre d'affichage normalisé visible ; et
la réalisation, par le système de traitement (118, 1118), d'une addition de l'aire de chaque face projetée par les sommets du premier ensemble de couleurs dans l'espace de fenêtre d'affichage normalisé.

12. Procédé selon la revendication 8, **caractérisé en ce qu'**un autre objet (306), à l'intérieur de la fenêtre d'affichage (202), est rendu avec un deuxième ensemble de couleurs, l'autre objet (306) n'étant pas l'objet d'intérêt (204).

13. Procédé selon la revendication 8, **caractérisé en ce que** l'objet d'intérêt (204) comporte une boîte englobante multidimensionnelle (208) renfermant l'objet numérique multidimensionnel (206).

14. Procédé selon la revendication 8, **caractérisé en ce que** l'environnement numérique multidimensionnel est au moins un environnement tridimensionnel, et dans lequel l'objet numérique multidimensionnel (206) est au moins un objet numérique tridimensionnel.

15. Support lisible par ordinateur stockant des instructions qui, lorsqu'elles sont exécutées par un système de traitement de données, amènent le système de traitement de données à réaliser le procédé selon l'une quelconque des revendications 8-14.
